(19)

Europäisches
Patentamt
European
Patent Office
Office européen
des brevets

(11) **EP 4 382 864 A1**

(12) **EUROPEAN PATENT APPLICATION**
published in accordance with Art. 153(4) EPC

(43) Date of publication:
**12.06.2024 Bulletin 2024/24**

(21) Application number: **21954481.4**

(22) Date of filing: **24.08.2021**

(51) International Patent Classification (IPC):
***G01C 21/16*** *(2006.01)* ***G01S 19/49*** *(2010.01)*

(86) International application number:
**PCT/CN2021/114305**

(87) International publication number:
**WO 2023/023936 (02.03.2023 Gazette 2023/09)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **Huawei Technologies Co., Ltd.
Shenzhen, Guangdong 518129 (CN)**

(72) Inventors:
• **WANG, Peisheng
  Shenzhen, Guangdong 518129 (CN)**

• **WANG, Jinjing
  Shenzhen, Guangdong 518129 (CN)**
• **CHEN, Jie
  Shenzhen, Guangdong 518129 (CN)**
• **CHENG, Yuan
  Shenzhen, Guangdong 518129 (CN)**

(74) Representative: **Goddar, Heinz J.
Boehmert & Boehmert
Anwaltspartnerschaft mbB
Pettenkoferstrasse 22
80336 München (DE)**

(54) **POSITIONING METHOD AND POSITIONING APPARATUS**

(57) This application provides a positioning method and a positioning apparatus, and pertains to the field of intelligent driving technologies. The method includes: obtaining first positioning information, second positioning information, and third positioning information, where the first positioning information is obtained based on inertial navigation data, the second positioning information is obtained based on satellite positioning data, and the third positioning information is obtained based on visual positioning data; and when a vehicle travels in a first environment, performing first fusion processing on the first positioning information and the second positioning information, to obtain a first positioning result, where satellite signal quality in the first environment meets a preset quality requirement; or when a vehicle travels in a second environment, performing second fusion processing on the first positioning information and the third positioning information, to obtain a second positioning result, where satellite signal quality in the second environment does not meet a preset quality requirement. The foregoing method can be used to implement accurate, stable, and reliable positioning of the vehicle, and therefore improves driving safety of the vehicle.

400

| | S410 |
| Obtain first positioning information, second positioning information, and third positioning information | |

| | S420 |
| When a vehicle travels in a first environment, perform first fusion processing on the first positioning information and the second positioning information, to obtain a first positioning result; or when a vehicle travels in a second environment, perform second fusion processing on the first positioning information and the third positioning information, to obtain a second positioning result | |

FIG. 4

EP 4 382 864 A1

**Description**

**TECHNICAL FIELD**

This application relates to the field of positioning technologies, and may be specifically applied to manual driving, intelligent driving, autonomous driving, unmanned driving, or the like. More specifically, this application relates to a positioning method and a positioning apparatus.

**BACKGROUND**

An autonomous driving technology uses computer vision, a radar, a monitoring apparatus, a global navigation satellite system, and the like in a collaborative manner, so that a motor vehicle can implement autonomous driving without an active manual operation. Precise positioning of a vehicle is a prerequisite for safe and stable driving. High-precision positioning can help a decision-making system plan a driving route in real time, select a proper lane, and handle various traffic conditions, which effectively improves driving quality and enhances driving safety and intelligence. If a vehicle location sensed by the vehicle greatly deviates from an actual location, the vehicle may collide with an obstacle when traveling along a route that is planned based on positioning. Consequently, a serious safety problem occurs.

Currently, an integrated positioning technology (or referred to as a multi-sensor fusion technology) is generally used to position a vehicle. To be specific, at least two of technologies such as satellite positioning, inertial positioning, radiolocation, and visual positioning are integrated to implement absolute positioning information and/or relative positioning information of the vehicle.

However, features of different sensors differ greatly. For example, continuity of a satellite navigation receiver for satellite positioning is poor, errors of an inertial measurement unit for inertial positioning accumulate with time, and real-time performance of a radar for radiolocation and real-time performance of a visual sensor for visual positioning are poor. In particular, in a complex urban environment, a sensor is prone to be affected by an environment (for example, weak satellite navigation signal in an underground garage, building blocking, light change, or rainy/foggy weather) in an actual working condition, resulting in a large positioning error or missing positioning information. Consequently, accuracy of integrated positioning is low or even positioning fails.

**SUMMARY**

This application provides a positioning method and a positioning apparatus, to implement accurate, stable, and reliable positioning of a vehicle and improve driving safety.

According to a first aspect, a positioning method is provided, including: obtaining first positioning information, second positioning information, and third positioning information, where the first positioning information is obtained based on inertial navigation data, the second positioning information is obtained based on satellite positioning data, and the third positioning information is obtained based on visual positioning data; and when a vehicle travels in a first environment, performing first fusion processing on the first positioning information and the second positioning information, to obtain a first positioning result, where satellite signal quality in the first environment meets a preset quality requirement; or when a vehicle travels in a second environment, performing second fusion processing on the first positioning information and the third positioning information, to obtain a second positioning result, where satellite signal quality in the second environment does not meet a preset quality requirement.

In this embodiment of this application, different integrated positioning methods may be used when the vehicle travels in different environments. In an environment in which a satellite signal is good, a positioning manner that integrates satellite positioning with inertial positioning may be used. In an environment in which a satellite signal is poor (such as a scenario of a multipath area or a scenario in which a satellite signal is severely blocked, for example, in a tunnel, in an urban canyon, or under a viaduct), a positioning manner that integrates inertial positioning with visual positioning may be used. In this way, even if a satellite signal is poor, the vehicle can still be positioned in a stable, reliable, and accurate manner. This improves driving safety of the vehicle.

With reference to the first aspect, in a possible implementation, the obtaining first positioning information includes: compensating the inertial navigation data based on a first bias, to obtain compensated inertial sensor data, where the inertial navigation data is raw data output by an inertial sensor; and obtaining the first positioning information based on the compensated inertial sensor data.

In this embodiment of this application, before the first positioning information is obtained, the raw data output by the inertial sensor may be first dynamically compensated in real time, to eliminate a bias caused by some factors. This reduces impact of the bias on positioning, and improves precision in data obtained for the first positioning information. Correspondingly, this improves precision of positioning that is performed based on the inertial navigation data.

With reference to the first aspect, in a possible implementation, the first bias is obtained based on a temperature and a calculation coefficient that exist when the inertial sensor outputs the inertial navigation data, where the calculation coefficient is obtained by performing least squares fitting on an angular velocity and a temperature that are output by the inertial sensor in a first time period, where the vehicle is in a non-running state in the first time period; or the calculation coefficient is a factory default value.

With reference to the first aspect, in a possible implementation, the first bias is obtained by using the following formula:

$$\begin{bmatrix} 1 & T_i \end{bmatrix} \bullet \begin{bmatrix} B \\ A \end{bmatrix} = \text{Bias}_i$$

$T_i$ is a corresponding temperature that exists when the inertial sensor outputs raw data at a time point i, and $\text{Bias}_i$ is a corresponding first bias that exists when the inertial sensor outputs the raw data at the time point i. $\text{Bias}_i$ is used to compensate the raw data output by the inertial sensor at the time point i. A and B are calculation coefficients. A and B are obtained by performing least squares fitting on the angular velocity and the temperature that are output by the inertial sensor in the first time period, where the vehicle is in the non-running state in the first time period. Alternatively, A and B are factory default values.

The first bias may be a bias generated by a temperature change.

With reference to the first aspect, in a possible implementation, the first bias is an average value of angular velocities output by the inertial sensor in a first time period, where the vehicle is in a non-running state in the first time period.

Theoretically, when the vehicle is in the non-running state (for example, a static state), the inertial sensor outputs 0. However, the inertial sensor has a bias. Therefore, when the vehicle is in the non-running state, the inertial sensor generates an angular velocity output and/or an acceleration output. Therefore, raw data output by the vehicle in the first time period may be collected, and an average value of the raw data is calculated as the first bias.

With reference to the first aspect, in a possible implementation, the inertial sensor includes a gyroscope and an accelerometer; and when the vehicle is in the non-running state in the first time period, the following conditions are met: a mean square error of angular velocities output by the gyroscope in the first time period is less than a first threshold; a mean square error of accelerations output by the accelerometer in the first time period is less than a second threshold; and a speed of the vehicle in the first time period is less than a third threshold.

Theoretically, when the vehicle is in the non-running state (for example, the static state), a vehicle speed is 0, and the inertial sensor outputs 0. However, the vehicle may slightly shake due to a factor such as external weather (for example, wind or rain). In other words, when the vehicle stops, the vehicle is not in an absolute static state. In this embodiment of this application, if the vehicle meets the foregoing conditions, it may be considered that the vehicle is in the static state.

With reference to the first aspect, in a possible implementation, the first bias includes at least one of a constant bias error, a proportionality factor error, a temperature error, a non-overlapping and non-orthogonal error, and a non-linear error.

The bias of the inertial sensor is caused due to many factors, such as earth rotation, a process error of the inertial sensor, a temperature change, and noise impact. The first bias may be caused by some of the factors. When the first bias is used to compensate the raw data output by the inertial sensor, impact of some factors may be eliminated.

With reference to the first aspect, in a possible implementation, the obtaining first positioning information includes: performing, based on a strapdown inertial navigation algorithm, numerical integration and posture solving processing on inertial data corresponding to the inertial sensor, to solve a posture, a speed, and a location of the vehicle to obtain the first positioning information; or processing, based on a dead reckoning method, inertial data corresponding to the inertial sensor and speed data corresponding to the vehicle to obtain a traveling direction and a traveling distance of the vehicle, and adding the traveling direction and the traveling distance to an initial location to obtain the first positioning information, where the inertial data corresponding to the inertial sensor is the inertial navigation data or data obtained by compensating the inertial navigation data.

With reference to the first aspect, in a possible implementation, the performing first fusion processing on the first positioning information and the second positioning information, to obtain a first positioning result includes: performing extended Kalman filter EKF processing on the first positioning information and the second positioning information based on a state transition equation, a first measurement equation, and a second measurement equation, to obtain the first positioning result; or the performing second fusion processing on the first positioning information and the third positioning information to obtain a second positioning result includes: performing extended Kalman filter EKF processing on the first positioning information and the third positioning information based on a state transition equation, a first measurement equation, and a third measurement equation, to obtain the second positioning result, where observation data of the first measurement equation comes from the inertial sensor, observation data of the second measurement equation comes from a global navigation satellite system, and observation data of the third measurement equation comes from a visual sensor.

In this embodiment of this application, measurement equations that respectively correspond to inertial positioning, satellite positioning, and visual positioning may be set. During fusion processing, different measurement equations may be selected and switched based on a traveling environment of the vehicle, to obtain fused positioning.

With reference to the first aspect, in a possible implementation, the performing extended Kalman filter EKF processing on the first positioning information and the second positioning information based on a state transition equation, a first measurement equation, and a second measurement equation, to obtain the first positioning result includes: performing state estimation based on the state transition equation, to obtain a predicted positioning result; obtaining, based on the first measurement equation and the first positioning information, a positioning result measured by the inertial sensor; obtaining, based on the second measurement equation and the second positioning information, a positioning result measured by the global navigation satellite system; and correcting the predicted positioning result based on the positioning result measured by the inertial sensor and the positioning result measured by the global navigation satellite system, to obtain the first positioning result; or

the performing extended Kalman filter EKF processing on the first positioning information and the third positioning information based on a state transition equation, a first measurement equation, and a third measurement equation, to obtain the second positioning result includes: performing state estimation based on the state transition equation, to obtain a predicted positioning result; obtaining, based on the first measurement equation and the first positioning information, a positioning result measured by the inertial sensor; obtaining, based on the third measurement equation and the third positioning information, a positioning result measured by the visual sensor; and correcting the predicted positioning result based on the positioning result measured by the inertial sensor and the positioning result measured by the visual sensor, to obtain the second positioning result.

When fusion positioning is performed, a predicted positioning result is corrected based on a positioning result that can be measured by a sensor, so as to position the vehicle in a more accurate manner.

With reference to the first aspect, in a possible implementation, the method further includes: obtaining an estimated error of at least one parameter after the EKF processing is performed, where the estimated error of the at least one parameter is used to correct a value of the at least one parameter, where the at least one parameter includes one or more of a northbound location, an eastbound location, a roll angle, a pitch angle, a yaw angle, an angular velocity output by the gyroscope, and a speed scale factor.

Herein, the estimated error of the at least one parameter may include one or more of a northbound location error, an eastbound location error, a roll angle error, a pitch angle error, a yaw angle error, a gyroscope bias, and a speed scale factor error.

With reference to the first aspect, in a possible implementation, the at least one parameter includes the speed scale factor, and the estimated error of the at least one parameter includes a speed scale factor error; and the method further includes: correcting the speed scale factor based on the speed scale factor error, to obtain a corrected speed scale factor; and obtaining a speed of the vehicle based on the corrected speed scale factor.

The speed scale factor error is used to correct the speed scale factor, which can improve measurement accuracy of a vehicle speed.

With reference to the first aspect, in a possible implementation, the first positioning result or the second positioning result includes the speed and a pitch angle of the vehicle, and the method further includes: determining a displacement value of the vehicle in a traveling time period based on the speed of the vehicle and the traveling time period; and determining an elevation variation of the vehicle in the traveling time period based on the pitch angle and the displacement value.

A speed and a pitch angle may be output after fusion processing is performed. Then, a slope angle and a longitudinal height of the vehicle are estimated based on the speed, the pitch angle, and a traveling time period, so as to identify a location of the vehicle in an elevation. In this way, whether the vehicle is switched between locations of different elevations and how switching is performed can also be accurately identified in a place in which a satellite signal is poor. This can improve positioning accuracy of the vehicle and driving safety of the vehicle.

With reference to the first aspect, in a possible implementation, the preset quality requirement includes at least one of the following: a satellite is in an effective positioning state; a horizontal dilution of precision of the satellite is lower than or equal to a preset precision threshold; a quantity of satellites in the effective positioning state is greater than or equal to a preset first quantity threshold; a quantity of satellites whose signal strengths each are greater than or equal to a preset first strength threshold is greater than or equal to a preset second quantity threshold; a strength of a satellite signal received by the vehicle is greater than or equal to a preset second strength threshold; and a signal-to-noise ratio of the vehicle is greater than or equal to a preset signal-to-noise ratio threshold.

According to a second aspect, a positioning apparatus is provided, including: a first positioning module, configured to obtain first positioning information, where the first positioning information is obtained based on inertial navigation data; a second positioning module, configured to obtain second positioning information, where the second positioning information is obtained based on satellite positioning data; a third positioning module, configured to output third positioning information, where the third positioning information is obtained based on visual positioning data; and a fusion positioning module, configured to: when a vehicle travels in a first environment, perform first fusion processing on the first positioning information and the second positioning information, to obtain a first positioning result, where satellite signal quality in the first environment meets a preset quality requirement; or a fusion positioning module, configured to: when a vehicle travels in a second environment, perform second fusion processing on the first positioning information and the third positioning information, to obtain a second positioning result, where satellite signal quality in the second environment does not meet a preset quality requirement.

With reference to the second aspect, in a possible implementation, the first positioning module is specifically configured to: compensate the inertial navigation data based on a first bias, to obtain compensated inertial sensor data, where the inertial navigation data is raw data output by an inertial sensor; and obtain the first positioning information based on the compensated inertial sensor data.

With reference to the second aspect, in a possible implementation, the first bias is obtained based on a temperature and a calculation coefficient that exist when the inertial sensor outputs the inertial navigation data, where the calculation coefficient is obtained by performing least squares fitting on an angular velocity and a temperature that are output by the inertial sensor in a first time period, where the vehicle is in a non-running state in the first time period; or the calculation coefficient is a factory default value.

With reference to the second aspect, in a possible implementation, the first bias is obtained by using the following formula:

$$\begin{bmatrix} 1 & T_i \end{bmatrix} \bullet \begin{bmatrix} B \\ A \end{bmatrix} = Bias_i$$

$T_i$ is a corresponding temperature that exists when the inertial sensor outputs raw data at a time point i, and $Bias_i$ is a corresponding first bias that exists when the inertial sensor outputs the raw data at the time point i. $Bias_i$ is used to compensate the raw data output by the inertial sensor at the time point i. A and B are calculation coefficients. A and B are obtained by performing least squares fitting on the angular velocity and the temperature that are output by the inertial sensor in the first time period, where the vehicle is in the non-running state in the first time period. Alternatively, A and B are factory default values.

With reference to the second aspect, in a possible implementation, the first bias is an average value of angular velocities output by the inertial sensor in a first time period, where the vehicle is in a non-running state in the first time period.

With reference to the second aspect, in a possible implementation, the inertial sensor includes a gyroscope and an accelerometer; and when the vehicle is in the non-running state in the first time period, the following conditions are met: a mean square error of angular velocities output by the gyroscope in the first time period is less than a first threshold; a mean square error of accelerations output by the accelerometer in the first time period is less than a second threshold; and a speed of the vehicle in the first time period is less than a third threshold.

With reference to the second aspect, in a possible implementation, the first bias includes at least one of a constant bias error, a proportionality factor error, a temperature error, a non-overlapping and non-orthogonal error, and a non-linear error.

With reference to the second aspect, in a possible implementation, the first positioning module is specifically configured to: perform, based on a strapdown inertial navigation algorithm, numerical integration and posture solving processing on inertial data corresponding to the inertial sensor, to solve a posture, a speed, and a location of the vehicle to obtain the first positioning information; or process, based on a dead reckoning method, inertial data corresponding to the inertial sensor and speed data corresponding to the vehicle to obtain a traveling direction and a traveling distance of the vehicle, and add the traveling direction and the traveling distance to an initial location to obtain the first positioning information, where the inertial data corresponding to the inertial sensor is the inertial navigation data or data obtained by compensating the inertial navigation data.

With reference to the second aspect, in a possible implementation, the fusion positioning module is specifically configured to: perform extended Kalman filter EKF processing on the first positioning information and the second positioning information based on a state transition equation, a first measurement equation, and a second measurement equation, to obtain the first positioning result; or perform extended Kalman filter EKF processing on the first positioning information and the third positioning information based on a state transition equation, a first measurement equation, and a third measurement equation, to obtain the second positioning result, where observation data of the first measurement equation comes from the inertial sensor, observation data of the second measurement equation comes from a global navigation satellite system, and observation data of the third measurement equation comes from a visual sensor.

With reference to the second aspect, in a possible implementation, the fusion positioning module is specifically configured to: perform state estimation based on the state transition equation, to obtain a predicted positioning result; obtain, based on the first measurement equation and the first positioning information, a positioning result measured by the inertial sensor; obtain, based on the second measurement equation and the second positioning information, a positioning result measured by the global navigation satellite system; and correct the predicted positioning result based on the positioning result measured by the inertial sensor and the positioning result measured by the global navigation satellite system, to obtain the first positioning result; or the fusion positioning module is specifically configured to: perform state estimation based on the state transition equation, to obtain a predicted positioning result; obtain, based on the first measurement equation and the first positioning information, a positioning result measured by the inertial sensor; obtain, based on the third measurement equation and the third positioning information, a positioning result measured by the visual sensor; and correct the predicted positioning result based on the positioning result measured by the inertial sensor and the positioning result measured by the visual sensor, to obtain the second positioning result.

With reference to the second aspect, in a possible implementation, the fusion positioning module is further configured to: obtain an estimated error of at least one parameter after the EKF processing is performed, where the estimated error of the at least one parameter is used to correct a value of the at least one parameter, where the at least one parameter includes one or more of a northbound location, an eastbound location, a roll angle, a pitch angle, a yaw angle, an angular velocity output by the gyroscope, and a speed scale factor.

With reference to the second aspect, in a possible implementation, the at least one parameter includes the speed scale factor, and the estimated error of the at least one parameter includes a speed scale factor error; and the fusion positioning module is further configured to: correct the speed scale factor based on the speed scale factor error, to obtain a corrected speed scale factor; and obtain a speed of the vehicle based on the corrected speed scale factor.

With reference to the second aspect, in a possible implementation, the first positioning result or the second positioning result includes the speed and a pitch angle of the vehicle, and the fusion positioning module is further configured to: determine a displacement value of the vehicle in a traveling time period based on the speed of the vehicle and the traveling time period; and determine an elevation variation of the vehicle in the traveling time period based on the pitch angle and the displacement value.

With reference to the second aspect, in a possible implementation, the preset quality requirement includes at least one of the following: a satellite is in an effective positioning state; a horizontal dilution of precision of the satellite is lower than or equal to a preset precision threshold; a quantity of satellites in the effective positioning state is greater than or equal to a preset first quantity threshold; a quantity of satellites whose signal strengths each are greater than or equal to a preset first strength threshold is greater than or equal to a preset second quantity threshold; a strength of a satellite signal received by the vehicle is greater than or equal to a preset second strength threshold; and a signal-to-noise ratio of the vehicle is greater than or equal to a preset signal-to-noise ratio threshold.

For beneficial effects of the apparatus in the second aspect, refer to beneficial effects of the method in the first aspect. Details are not described herein.

According to a third aspect, a positioning apparatus is provided, including at least one memory and at least one processor, where the at least one memory is configured to store a program, and the at least one processor is configured to run the program, to perform the positioning method according to the first aspect and any one of the implementations of the first aspect.

According to a fourth aspect, a chip is provided, including at least one processor and an interface circuit, where the interface circuit is configured to provide program instructions or data for the at least one processor, and the at least one processor is configured to execute the program instructions, to perform the positioning method according to the first aspect and any one of the implementations of the first aspect.

According to a fifth aspect, this application provides a chip system, where the chip system includes at least one processor, configured to support implementation of a function in the first aspect and any one of the implementations of the first aspect, for example, a function of receiving or processing data and/or information in the foregoing method.

In a possible design, the chip system further includes a memory. The memory is configured to store program instructions and data. The memory is located inside the processor or outside the processor. The chip system may include a chip, or may include a chip and another discrete component.

According to a sixth aspect, a computer-readable storage medium is provided. The computer-readable storage medium stores a computer program. When the computer program is run on a computer, the computer is enabled to perform the positioning method according to the first aspect and any one of the implementations of the first aspect.

According to a seventh aspect, a computer program product is provided, where the computer program product includes a computer program, and when the computer program product is run on a computer, the computer is enabled to perform the positioning method according to the first aspect and any one of the implementations of the first aspect.

According to an eighth aspect, a vehicle is provided, including sensors and the positioning apparatus according to the second aspect and any one of the implementations of the second aspect, or including sensors and the positioning apparatus according to the third aspect.

Further, the vehicle may be an intelligent driving vehicle, an autonomous driving vehicle, an assisted driving vehicle, an unmanned driving vehicle, or the like. For example, the vehicle may be an automated guided vehicle (automated guided vehicle, AGV) or an unmanned transport vehicle.

The sensors may include an inertial sensor, a global navigation satellite system, and a visual sensor.

According to a ninth aspect, a server is provided, including a processor and the positioning apparatus according to the second aspect and any one of the implementations of the second aspect, or including a processor and the positioning apparatus according to the third aspect.

For example, the server may be a cloud server.

According to a tenth aspect, a system is provided, including a target vehicle and a server, where the target vehicle and the server are configured to perform the positioning method according to the first aspect. Specifically, the target vehicle is configured to obtain first positioning information, second positioning information, and third positioning information, where the first positioning information is obtained based on inertial navigation data, the second positioning information is obtained based on satellite positioning data, and the third positioning information is obtained based on visual positioning data. The server is configured to: when the target vehicle travels in a first environment, perform first fusion processing on the first positioning information and the second positioning information, to obtain a first positioning result, where satellite signal quality in the first environment meets a preset quality requirement. The server is configured to: when the target vehicle travels in a second environment, perform second fusion processing on the first positioning information and the third positioning information, to obtain a second positioning result, where satellite signal quality in the second environment does not meet the preset quality requirement.

## BRIEF DESCRIPTION OF DRAWINGS

FIG. 1 is a functional block diagram of a vehicle to which an embodiment of this application is applicable;
FIG. 2 is a schematic diagram of a system to which an embodiment of this application is applicable;
FIG. 3 is a schematic diagram of an autonomous driving system to which an embodiment of this application is applicable;
FIG. 4 is a schematic flowchart of a positioning method according to an embodiment of this application;
FIG. 5 is a schematic diagram of an application scenario according to an embodiment of this application;
FIG. 6 is a schematic flow block diagram of a positioning method according to an embodiment of this application;
FIG. 7 is a schematic diagram of dead reckoning according to an embodiment of this application;
FIG. 8 is a schematic flowchart of a method for correcting raw data from an inertial sensor according to an embodiment of this application;
FIG. 9 is a schematic diagram of distribution of raw data output by a gyroscope when a vehicle is in a non-running state and distribution of data obtained by performing compensation based on a first bias;
FIG. 10 is a schematic diagram of a structure of a positioning apparatus according to an embodiment of this application; and
FIG. 11 is a schematic diagram of a structure of another positioning apparatus according to an embodiment of this application.

## DESCRIPTION OF EMBODIMENTS

The positioning methods and/or the positioning apparatuses provided in embodiments of this application may be applied to various driving apparatuses such as vehicles, or may be applied to various cloud computing apparatuses such as servers. These methods and/or apparatuses may be applied to manual driving, assisted driving, and autonomous driving or unmanned driving. The following describes technical solutions of this application with reference to accompanying drawings.

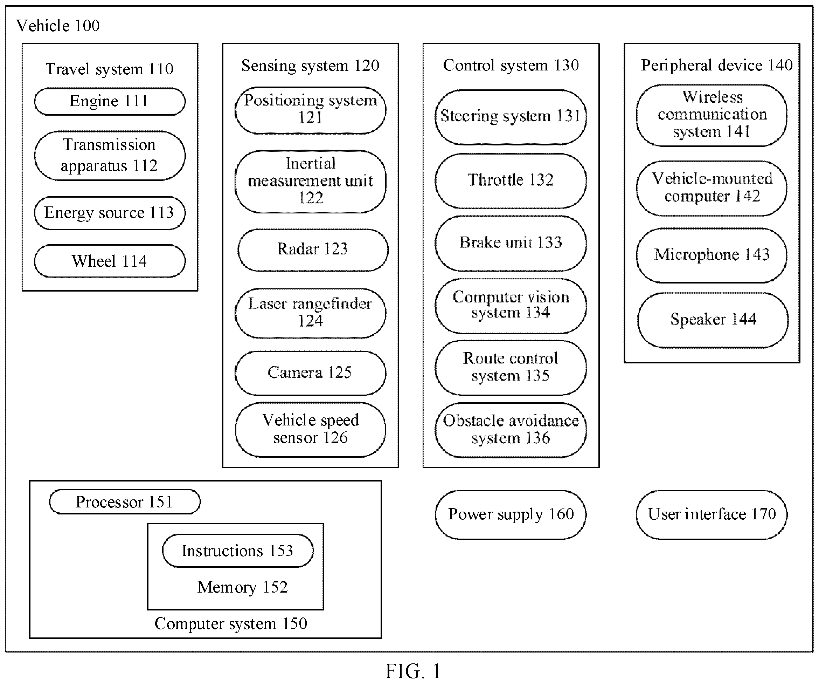

FIG. 1 is a functional block diagram of a vehicle to which an embodiment of this application is applicable. A vehicle 100 may be a manually driven vehicle, or the vehicle 100 may be set to be in a fully or partially autonomous driving mode.

For example, the vehicle 100 can control the vehicle 100 in an autonomous driving mode. In addition, a manual operation may be performed to determine current states of the vehicle and a surrounding environment of the vehicle, determine possible behavior of at least one another vehicle in the surrounding environment, and determine a confidence level corresponding to a possibility that the another vehicle performs the possible behavior. Then, the vehicle 100 is controlled based on determined information. When the vehicle 100 is in the autonomous driving mode, the vehicle 100 may be set to operate without interacting with a person.

The vehicle 100 may include various subsystems, such as a travel system 110, a sensing system 120, a control system 130, one or more peripheral devices 140, a computer system 150, a power supply 160, and a user interface 170.

Optionally, the vehicle 100 may include more or fewer subsystems, and each subsystem may include a plurality of elements. In addition, each subsystem and element of the vehicle 100 may be interconnected in a wired or wireless manner.

For example, the travel system 110 may include a component for providing power for the vehicle 100 to move. In an embodiment, the travel system 110 may include an engine 111, a transmission apparatus 112, an energy source 113, and a wheel 114 (or a tire). The engine 111 may be an internal combustion engine, a motor, an air compression engine, or a combination of other types of engines, for example, a hybrid engine including a gasoline engine and a motor, or a hybrid engine including an internal combustion engine and an air compression engine. The engine 111 may convert the energy source 113 into mechanical energy.

For example, the energy source 113 includes gasoline, diesel, another petroleum-based fuel, propane, another compressed gas-based fuel, ethanol, a solar panel, a battery, and another power source. The energy source 113 may also provide energy for another system of the vehicle 100.

For example, the transmission apparatus 112 may include a gearbox, a differential, and a drive shaft, where the transmission apparatus 112 may transmit mechanical power from the engine 111 to the wheel 114.

In an embodiment, the transmission apparatus 112 may further include another component, such as a clutch. The drive shaft may include one or more shafts that may be coupled to one or more wheels 114.

For example, the sensing system 120 may include several sensors that sense information about a surrounding environment of the vehicle 100.

For example, the sensing system 120 may include a positioning system 121, an inertial measurement unit (inertial measurement unit, IMU) 122, a radar 123, a laser rangefinder 124, a camera 125, and a vehicle speed sensor 126. The sensing system 120 may further include a sensor (such as an in-vehicle air quality monitor, a fuel gauge, or an oil temperature gauge) in an internal system of the monitored vehicle 100. Sensor data from one or more of these sensors can be used to detect an object and corresponding features (a location, a shape, a direction, a speed, and the like) of the object. Detection and recognition are key functions for a safe operation of the autonomous driving vehicle 100.

The positioning system 121 may be configured to estimate a geographic location of the vehicle 100. The positioning system 121 may be a global navigation satellite system (global navigation satellite system, GNSS). The GNSS may be specifically a global satellite navigation system (such as a global positioning system (global positioning system, GPS) of the United States, a GLONASS satellite navigation system of Russia, a Galileo satellite navigation system (Galileo satellite navigation system) of Europe, or a BeiDou navigation satellite system (BeiDou navigation satellite system, BDS) of China), a regional satellite navigation system (such as a quasi-zenith satellite system (quasi-zenith satellite system, QZSS) of Japan, or an Indian regional navigation satellite system (Indian regional navigation satellite system, IRNSS) of India), an enhanced satellite navigation system (such as a wide area augmentation system (wide area augmentation system, WAAS) of the United States, a European geostationary navigation overlay service (European geostationary navigation overlay service, EGNOS) of Europe, or a multi-functional satellite augmentation system (multi-functional satellite augmentation system, MSAS) of Japan), or the like. The GNSS can provide a user (for example, a vehicle 100) with all-weather and high-precision location (for example, three-dimensional coordinates, or longitude and latitude coordinates and a geodetic elevation), speed, and time information at any place on a surface of the earth or in terrestrial space. Therefore, the GNSS is also referred to as a space-based positioning, navigation, and timing (positioning, navigation and timing, PNT) system. A location provided by the GNSS is an absolute location of the user (such as the vehicle 100) in a geodetic world coordinate system, such as a location described by using geodetic longitude, geodetic latitude, and a geodetic elevation in a world geodetic system-1984 coordinate system (world geodetic system-1984 coordinate system, WGS-84), or a location described by using three-dimensional rectangular coordinates in a universal transverse Mercator (universal transverse Mercator, UTM) coordinate system. In this embodiment of this application, a technology for performing positioning by using the positioning system 123 is a satellite positioning technology.

The IMU 122 may be configured to sense a location change and an orientation change of the vehicle 100 based on an inertial acceleration. In an embodiment, the IMU 122 may be a combination of an accelerometer and a gyroscope. Specifically, the IMU 122 may include three single-axis accelerometers and three single-axis gyroscopes. The accelerometers are configured to detect acceleration signals of the vehicle 100 on three independent axes in a vehicle body coordinate system. The gyroscopes are configured to detect angular velocity (or posture angle) signals of the vehicle body (that is, the vehicle 100) relative to a navigation coordinate system. In other words, the IMU 122 can measure an angular velocity of rotation and a linear acceleration of the vehicle 100 in three-dimensional space. These signals can be used to obtain information such as a posture, a speed, and displacement of the vehicle 100 through solving. Specifically, a location and an orientation of the vehicle 100 at a current moment may be deduced based on a location and an orientation of the vehicle 100 at a previous moment by using the IMU 122. The IMU 122 is configured to measure a route along which the vehicle 100 moves relative to a start point. Therefore, the IMU 122 provides relative positioning information. The vehicle body coordinate system herein is a coordinate system that uses a vehicle body as a center and that describes a relationship between a surrounding object of the vehicle 100 and the vehicle 100. An origin of the vehicle body coordinate system is fixedly connected to the vehicle body. The navigation coordinate system may be an earth-fixed coordinate system, a geographic coordinate system (which is also referred to as a local horizontal coordinate system), or the like. Commonly used geographic coordinate systems include an "east-north-up" coordinate system and a "north-east-down" coordinate system. Posture angles of the vehicle body include a roll (roll) angle, a pitch (pitch) angle, and a yaw (yaw) angle, which are all defined in the geographic coordinate system. It should be understood that there is a definite relationship between different coordinate systems, and a coordinate system may be converted into another coordinate system through a series of rotation and translation changes. Details are not described herein. In this embodiment of this application, a technology for performing positioning based on data measured by the IMU 122 is an inertial positioning technology.

For example, the radar 123 may sense an object in a surrounding environment of the vehicle 100 based on radio information. In some embodiments, in addition to sensing the object, the radar 123 may be further configured to sense a speed and/or an advancing direction of the object. For example, the radar 123 may transmit an ultrasonic wave, receive an ultrasonic wave reflected by an obstacle, and finally obtain point cloud data (point cloud data) of a surrounding environment. Each point in the point cloud data has spatial coordinate information, and some points may further include color information or reflection intensity information. The point cloud data is processed by using a relocation algorithm, such as simultaneous localization and mapping (simultaneous localization and mapping, SLAM). For example, a distance and a posture change of relative motion of the radar 123 are calculated by matching and comparing two point clouds at different moments, so that information about a relative location, a speed, and a yaw angle of the vehicle 100 can be obtained. In this way, the vehicle 100 is positioned. In this embodiment of this application, a technology for performing positioning by using the radar 123 belongs to a radiolocation technology.

For example, the laser rangefinder 124 may use laser light to sense an object in an environment in which the vehicle 100 is located. In some embodiments, the laser rangefinder 124 may include one or more laser sources, a laser scanner, one or more detectors, and another system component.

For example, the camera 125 may be configured to capture a plurality of images of the surrounding environment of the vehicle 100. For example, the camera 125 may be a static camera or a video camera.

For example, the vehicle speed sensor 126 may be configured to measure a speed of the vehicle 100. For example, a real-time speed test can be performed on the vehicle. The measured speed of the vehicle may be transferred to the control system 130 to control the vehicle.

As shown in FIG. 1, the control system 130 may control operations of the vehicle 100 and components of the vehicle 100. The control system 130 may include various elements, such as a steering system 131, a throttle 132, a brake unit 133, a computer vision system 134, a route control system 135, and an obstacle avoidance system 136.

For example, the steering system 131 may be operated to adjust an advancing direction of the vehicle 100. For example, in an embodiment, the steering system may be a steering wheel system. The throttle 132 may be configured to control an operation speed of the engine 111 and thus control a speed of the vehicle 100.

For example, the brake unit 133 may be configured to control the vehicle 100 to decelerate. The brake unit 133 may use friction to retard the wheel 114. In another embodiment, the brake unit 133 may convert kinetic energy of the wheel 114 into a current. Alternatively, the brake unit 133 may slow down a rotational speed of the wheel 114 in another manner, to control the speed of the vehicle 100.

As shown in FIG. 1, the computer vision system 134 may be operated to process and analyze images captured by the camera 125, so as to identify objects and/or features in the surrounding environment of the vehicle 100. The objects and/or the features may include traffic information, a road boundary, and an obstacle. The computer vision system 134 may use an object recognition algorithm, a structure from motion (structure from motion, SFM) algorithm, video tracking, and another computer vision technology. In some embodiments, the computer vision system 134 may be configured to: draw a map for an environment, track an object, estimate a speed of the object, and the like. In some embodiments, the computer vision system 134 may process, by using a relocation algorithm such as SLAM, an image captured by the camera 125, to identify a location of the camera 125 and estimate a pose of the camera 125. Then, information about a relative location, a speed, a yaw angle, and the like of the vehicle 100 can be obtained. In this way, the vehicle 100 is positioned. In this embodiment of this application, a technology for performing positioning by using the computer vision system 134 is a visual positioning technology.

For example, the route control system 135 may be configured to determine or plan a driving route of the vehicle 100. In some embodiments, the route control system 135 may determine the driving route of the vehicle 100 with reference to data from the sensor, the GNSS, and one or more predetermined maps.

As shown in FIG. 1, the obstacle avoidance system 136 may be configured to identify, evaluate, and avoid, or bypass in another manner, a potential obstacle in an environment of the vehicle 100.

In an example, the control system 130 may additionally or alternatively include a component other than those shown and described, or may include fewer components than those shown above.

As shown in FIG. 1, the vehicle 100 may interact with an external sensor, another vehicle, another computer system, or a user by using the peripheral device 140. The peripheral device 140 may include a wireless communication system 141, a vehicle-mounted computer 142, a microphone 143, and/or a speaker 144.

In some embodiments, the peripheral device 140 may provide a means for the vehicle 100 to interact with the user interface 170. For example, the vehicle-mounted computer 142 may provide information for a user of the vehicle 100. The user interface 170 may further operate the vehicle-mounted computer 142 to receive a user input, and the vehicle-mounted computer 142 can perform an operation by using a touchscreen. In another case, the peripheral device 140 may provide a means for the vehicle 100 to communicate with another device in the vehicle. For example, the microphone 143 may receive audio (such as a voice command or another audio input) from the user of the vehicle 100. Similarly, the speaker 144 may output audio to the user of the vehicle 100.

As illustrated in FIG. 1, the wireless communication system 141 may perform wireless communication with one or more devices directly or through a communication network. For example, the wireless communication system 141 may perform communication through a 4G cellular network such as long term evolution (long term evolution, LTE), or a 5G cellular network such as a new radio (new radio, NR) system. The wireless communication system 141 may communicate with a wireless local area network (wireless local area network, WLAN) through wireless fidelity (Wi-Fi).

In some embodiments, the wireless communication system 141 may directly communicate with a device by using an infrared link, Bluetooth, or a ZigBee (ZigBee) protocol; or may perform communication by using other wireless protocols, such as various vehicle communication systems. For example, the wireless communication system 141 may include one or more dedicated short-range communication (dedicated short-range communication, DSRC) devices, and these devices may include public and/or private data communication between a vehicle and/or a roadside station.

As shown in FIG. 1, the power supply 160 may provide power to various components of the vehicle 100. In an embodiment, the power supply 160 may be a rechargeable lithium-ion or lead-acid battery. One or more battery strings of such a battery may be configured as a power supply to supply power to the components of the vehicle 100. In some embodiments, the power supply 160 and the energy source 113 may be implemented together, as in some all-electric vehicles.

For example, some or all of the functions of the vehicle 100 may be controlled by the computer system 150. The computer system 150 may include at least one processor 151, and the processor 151 executes instructions 153 stored in, for example, a non-transitory computer-readable medium in a memory 152. The computer system 150 may alternatively be a plurality of computing devices that control individual components or subsystems of the vehicle 100 in a distributed manner.

For example, the processor 151 may be any conventional processor such as a central processing unit (central processing unit, CPU).

Optionally, the processor 151 may be a dedicated device, such as an application-specific integrated circuit (application-specific integrated circuit, ASIC) or another hardwarebased processor. Although FIG. 1 functionally illustrates the processor, the memory, and other elements of the computer that are in a same block, a person of ordinary skill in the art should understand that the processor, the computer, or the memory may actually include a plurality of processors, computers, or memories that may or may not be stored in a same physical housing. For example, the memory may be a hard disk drive or another storage medium located in a housing different from that of the computer. Therefore, it is understood that a reference to the processor or the computer includes a reference to a set of processors or computers or memories that may or may not operate in parallel. Different from using a single processor to perform the steps described herein, each of some components such as a steering component and a deceleration component may include a processor. The processor performs only computation related to a component-specific function.

In various aspects described herein, the processor 151 may be located on another apparatus far away from the vehicle 100 and perform wireless communication with the vehicle 100. In another aspect, some of the processes described herein are performed on a processor disposed inside the vehicle, while others are performed by a remote processor. The processes include a step for performing a single operation.

In some embodiments, the memory 152 may include the instructions 153 (such as program logic), and the instructions 153 may be used by the processor 151 to perform various functions of the vehicle 100, including the functions described above. The memory 152 may also include additional instructions, for example, instructions for sending data to, receiving data from, interacting with, and/or controlling one or more of the travel system 110, the sensing system 120, the control system 130, and the peripheral device 140.

For example, in addition to the instructions 153, the memory 152 may further store data, such as a road map, route information, a location, a direction, and a speed of the vehicle, other vehicle data, and other information. Such information may be used by the vehicle 100 and the computer system 150 while the vehicle 100 is operating in autonomous, semi-autonomous, and/or manual modes.

As shown in FIG. 1, the user interface 170 may be configured to provide information for or receive information from the user of the vehicle 100. Optionally, the user interface 170 may be included in one or more input/output devices in a set of peripheral devices 140, for example, the wireless communication system 141, the vehicle-mounted computer 142, the microphone 143, and the speaker 144.

In this embodiment of this application, the computer system 150 may control functions of the vehicle 100 based on inputs received from various subsystems (such as the travel system 110, the sensing system 120, and the control system 130) and the user interface 170. For example, the computer system 150 may use an input from the control system 130 to control the brake unit 133 to avoid an obstacle that is detected by the sensing system 120 and the obstacle avoidance system 136. In some embodiments, the computer system 150 is operated to provide control over many aspects of the vehicle 100 and the subsystems of vehicle.

Optionally, one or more of the foregoing components may be installed separately from or associated with the vehicle 100. For example, the memory 152 may exist partially or completely separate from the vehicle 100. The foregoing components may be communicatively coupled together in a wired and/or wireless manner.

Optionally, the foregoing components are merely examples. In actual application, components in the foregoing modules may be added or removed based on an actual requirement. FIG. 1 should not be construed as a limitation on this embodiment of this application.

Optionally, the vehicle 100 may be an autonomous driving vehicle traveling on a road and may identify an object in the surrounding environment of the vehicle, to determine to adjust a current speed. The object may be another vehicle, a pedestrian, a traffic control device, another type of object, or the like. In some examples, each identified object may be considered independently, and a speed to be adjusted to by the autonomous driving vehicle may be determined based on features of the object, such as a current speed of the object, an acceleration of the object, and a distance between the object and the vehicle.

Optionally, the vehicle 100 or a computing device (such as the computer system 150, the computer vision system 134, or the memory 152 in FIG. 1) associated with the vehicle 100 may predict behavior of an identified object based on a feature of the identified object and a state (such as traffic, rain, or ice on a road) of a surrounding environment.

Optionally, all identified objects depend on behavior of each other. Therefore, all the identified objects may be considered together to predict behavior of a single identified object. The vehicle 100 can adjust a speed of the vehicle 100 based on the predicted behavior of the identified object. In other words, the autonomous driving vehicle can determine, based on the predicted behavior of the object, that the vehicle needs to be adjusted (for example, accelerated, decelerated, or stopped) to a stable state. In this process, another factor may also be considered to determine the speed of the vehicle 100, for example, a horizontal location of the vehicle 100 on a road on which the vehicle travels, curvature of the road, proximity between a static object and the vehicle, and proximity between a dynamic object and the vehicle.

In addition to instructions for adjusting the speed of the autonomous driving vehicle, the computing device may further provide instructions for modifying a steering angle of the vehicle 100, so that the autonomous driving vehicle follows a given track and/or maintains safe horizontal and longitudinal distances from an object (such as a vehicle in an adjacent lane on the road) near the autonomous driving vehicle.

In an example, the computer system 150 shown in FIG. 1 may further receive information from or transfer information to another computer system. Alternatively, sensor data collected from the sensing system 120 of the vehicle 100 may be transferred to another computer to process the data.

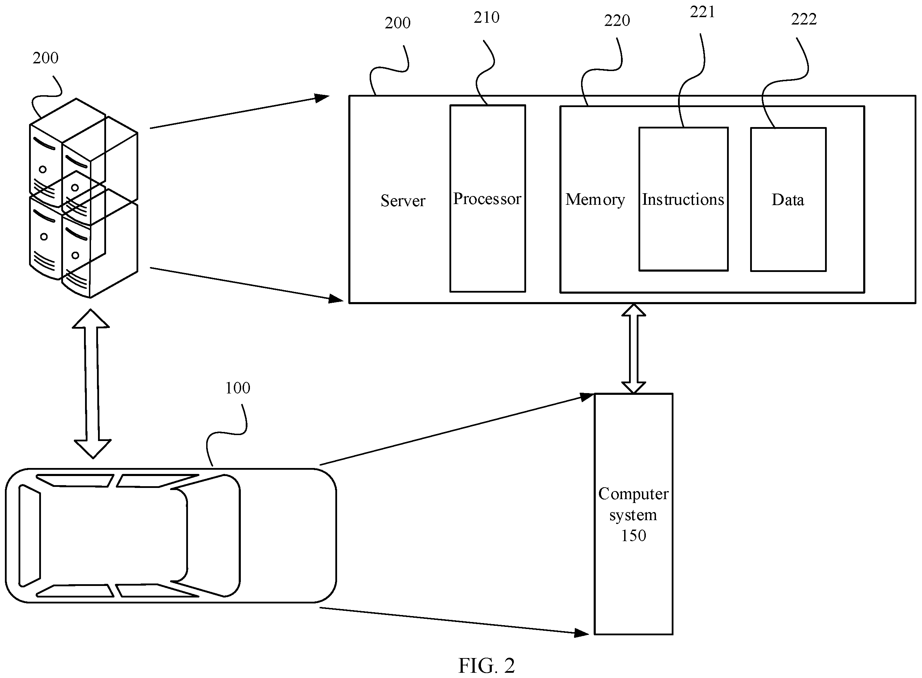

For example, FIG. 2 is a schematic diagram of a system to which an embodiment of this application is applicable. The system includes a vehicle 100 and a server 200. As shown in FIG. 2, the vehicle 100 may receive information from the server 200, and the vehicle 100 may also transfer obtained information to the server 200. Information (for example, various data) from the vehicle 100 (which may be specifically a computer system 150) may be transmitted to the server 200 through a network for further processing or storage. The network and an intermediate node may include various configurations and protocols, including the Internet, the worldwide web, an intranet, a virtual private network, a wide area network, a local area network, a private network using one or more proprietary communication protocols, the Ethernet, wireless fidelity (wireless fidelity, Wi-Fi), and hypertext transfer protocol (hypertext transfer protocol, HTTP), and various combinations thereof. Such communication may be performed by any device that can transmit data to and from other computers, such as a modem or a wireless interface.

In an example, the server 200 may be a server including a plurality of computers, for example, a load balancing server cluster. In order to receive, process, and transmit data from the computer system 150, the server 200 may exchange information with different nodes of the network. The server 200 may have a configuration similar to that of the computer system 150. As shown in FIG. 1, the server 200 includes a processor 210 and a memory 220, where the memory 220 is configured to store instructions 221 and/or data 222.

For example, the data 222 stored in the server 200 may include information related to a status of the vehicle, such as information about a location, a speed, a light, a posture, and a sound of the vehicle; may include information related to a road condition around the vehicle, such as map data, information about a road type, a traffic sign, a traffic marking, and information about a pedestrian, another vehicle, and an obstacle around the vehicle; and may include information related to a dynamic environment, such as weather, light intensity, and visibility information. For example, the server 200 may receive, detect, store, update, and transmit the information related to the status of the vehicle, the information related to the road condition of the vehicle, the information related to the dynamic environment, and the like.

For example, when the instructions 221 stored in the server 200 are executed, the server 200 may implement the positioning method provided in embodiments of this application, to position the vehicle 100.

It should be understood that the server 200 is only an example of a device that exchanges information with the vehicle 100, and a structural block diagram of the server 200 shown in FIG. 1 is also merely an example of a functional block diagram. The vehicle 100 may further interact with another type of cloud device, such as a cloud computing apparatus, a cloud storage apparatus, or a cloud service center. This is not particularly limited in this embodiment of this application.

For example, the vehicle 100 interacts with the cloud service center. The cloud service center may receive information (such as data or other information collected by a sensor of the vehicle 100) from the vehicle 100 in an operating environment of the cloud service center through a network such as a wireless communication network. The cloud service center runs, based on the received data, a related program that is stored in the cloud service center and that is for controlling autonomous driving of the vehicle, to control the vehicle 100 (such as an autonomous driving vehicle). The related program for controlling autonomous driving of the vehicle may be a program for managing interaction between the autonomous driving vehicle and an obstacle on a road, a program for controlling a route or a speed of the autonomous driving vehicle, a program for controlling interaction between the autonomous driving vehicle and another autonomous driving vehicle on the road, or the like.

In some examples, the cloud service center sends a suggested solution for a possible driving condition in an environment to the vehicle 100 (for example, informs the vehicle 100 of an obstacle ahead and how to bypass the obstacle). For example, the cloud service center may assist the vehicle 100 in determining how to travel when there is a particular obstacle in an environment. The cloud service center sends, to the vehicle 100, a response indicating how the vehicle travels in a given scenario. For example, the cloud service center may determine, based on collected sensor data, that there is a temporary stop sign in front of a road; and determine, based on a "lane closed" sign on the lane and sensor data of a construction vehicle, that the lane is closed due to construction. Correspondingly, the cloud service center sends a suggested operation mode (for example, indicates the vehicle 100 to change to another lane) for the vehicle 100 to bypass the obstacle. When the cloud service center views a video stream in an operating environment of the cloud service center and determines that the vehicle 100 can safely and successfully bypass the obstacle, operation steps performed for the vehicle 100 may be added to a driving information map. Correspondingly, the information may be sent to another vehicle that may encounter a same obstacle in this area, to assist the another vehicle in identifying the closed lane and bypassing the obstacle.

In some embodiments, the cloud service center may run, based on the received data, positioning instructions or a positioning program stored in the cloud service center, to position the vehicle 100 and, for example, output information such as a location, a speed, and a posture of the vehicle 100.

It should be understood that the vehicle 100 may be a car, a truck, a motorcycle, a bus, a boat, an airplane, a helicopter, a mower, an entertainment vehicle, a playground vehicle, a construction device, a tram, a golf cart, a train, a handcart, or the like. This is not specifically limited in this embodiment of this application.

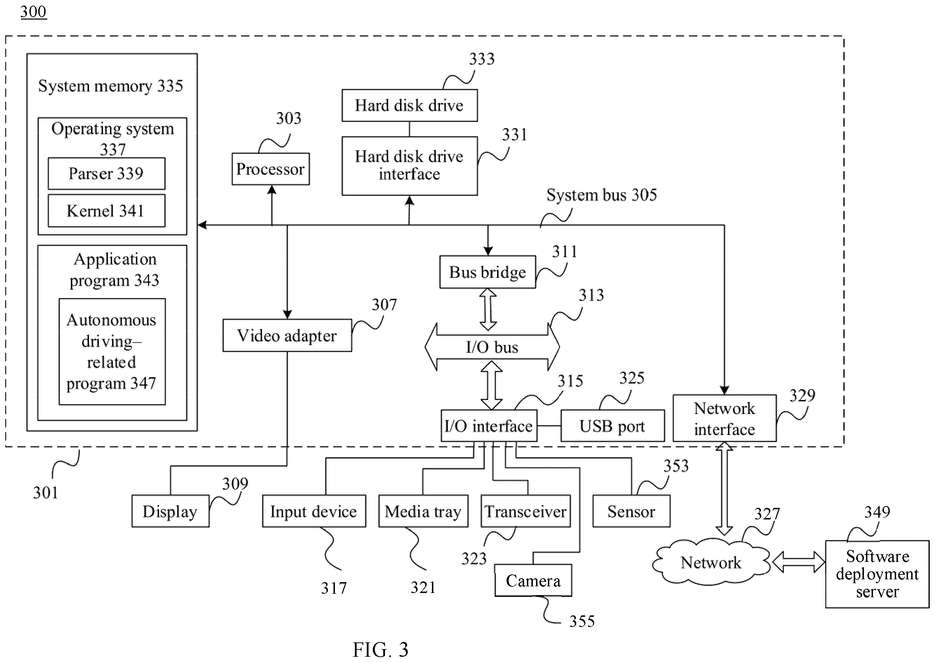

In a possible implementation, the vehicle 100 shown in FIG. 1 may be an autonomous driving vehicle. The following describes an autonomous driving system in detail with reference to FIG. 3.

FIG. 3 is a schematic diagram of an autonomous driving system to which an embodiment of this application is applicable. An autonomous driving system (autonomous driving system, ADS) 300 shown in FIG. 3 includes a computer system 301. The computer system 301 includes a processor 303, and the processor 303 is coupled to a system bus 305. The processor 303 may include one or more processors, and each processor may include one or more processor cores. A video adapter (video adapter) 307 may drive a display 309, and the display 309 is coupled to the system bus 305. The system bus 305 may be coupled to an input/output (I/O) bus 313 through a bus bridge 311, and an I/O interface 315 is coupled to the I/O bus 313. The I/O interface 315 communicates with a plurality of I/O devices, for example, an input device 317 (such as a keyboard, a mouse, or a touchscreen), a media tray (media tray) 321 (such as a compact disc read-only memory (compact disc read-only memory, CD-ROM), a multimedia interface), a transceiver 323, a sensor 353, and a camera 355. The transceiver 323 may send and/or receive radio communication information. The sensor 353 may be associated with the computer system 301, and the sensor 353 may be configured to detect a surrounding environment of the computer system 301. Optionally, if the computer system 301 is provided in an autonomous driving vehicle, the sensor 353 may include one or more of a camera, an infrared sensor, a GPS, a laser radar, a millimeter-wave radar, an ultrasonic sensor, a chemical detector, a bioelectricity sensor, a microphone, and the like. The camera 355 may capture static and dynamic digital video images. An interface connected to the I/O interface 315 may be a universal serial bus (universal serial bus, USB) port 325.

The processor 303 may be any conventional processor, such as a reduced instruction set computer (reduced instruction set computer, RISC) processor, a complex instruction set computer (complex instruction set computer, CISC) processor, or a combination thereof.

Optionally, the processor 303 may be a dedicated apparatus such as an application-specific integrated circuit (application-specific integrated circuit, ASIC). The processor 303 may be a neural network processor, or a combination of the neural network processor and the foregoing conventional processor.

Optionally, in some embodiments, the computer system 301 may be located far away from the autonomous driving vehicle, and may perform wireless communication with the autonomous driving vehicle. In other aspects, some of the processes described in this application are performed on a processor disposed in the autonomous driving vehicle, and others are performed by a remote processor (such as the processor 210 in the server 200 shown in FIG. 1), including an action for performing a single operation.

The computer system 301 may communicate with a software deployment server 349 through a network interface 329. The network interface 329 may be a hardware network interface such as a network adapter. A network 327 may be an external network such as the Internet, or may be an internal network such as the Ethernet or a virtual private network (virtual private network, VPN). Optionally, the network 327 may alternatively be a wireless network such as a Wi-Fi network or a cellular network.

As shown in FIG. 3, a hard disk drive interface 331 is coupled to the system bus 305, the hard disk drive interface 331 may be connected to a hard disk drive 333, and a system memory 335 is coupled to the system bus 305. Data running in the system memory 335 may include an operating system 337 and an application program 343. The operating system 337 may include a parser (shell) 339 and a kernel (kernel) 341. The parser 339 is an interface between a user and the kernel (kernel) 341 of the operating system. The parser 339 may be an outermost layer of the operating system 337. The parser 339 may manage interaction between the user and the operating system 337, for example, wait for input of the user, interpret input of the user to the operating system 337, and process various output results of the operating system 337. The kernel 341 may include components that are in the operating system 337 and that are configured to manage a memory, a file, a peripheral, and a system resource, and the kernel 341 may directly interact with hardware. The kernel 341 of the operating system usually runs a process, provides communication between processes, and provides CPU time slice management, interruption, memory management, I/O management, and the like. The application program 343 includes a related program for controlling autonomous driving of the vehicle, such as a program for managing interaction between the autonomous driving vehicle and an obstacle on a road, a program for controlling a route or a speed of the autonomous driving vehicle, or a program for controlling interaction between the autonomous driving vehicle and another autonomous driving vehicle on the road. The application program 343 is also included in a system of the software deployment server 349. In an embodiment, when an autonomous driving-related program 347 needs to be run, the computer system 301 may download the application program from the software deployment server 349.

For example, the application program 343 may alternatively be a program for the autonomous driving vehicle to interact with a lane line on a road, that is, a program for tracking a lane line in real time.

For example, the application program 343 may alternatively be a program that controls the autonomous driving vehicle to perform automatic parking.

In a process of running the application program 343, the computer system 301 needs to obtain surrounding environment information. For example, the sensor 353 may be configured to detect a surrounding environment of the computer system 301.

For example, the sensor 353 may detect a lane on a road. For example, the sensor may detect a lane line; and can track, in real time, a lane line change in a specific range in front of the vehicle in a moving process of the vehicle (for example, the vehicle is traveling). For another example, the sensor 353 may detect an animal (such as a pedestrian), a vehicle, an obstacle, a sidewalk, and the like. Further, the sensor 353 may detect a surrounding environment of each of the foregoing objects such as the animal, the vehicle, the obstacle, and the sidewalk, for example, a surrounding environment of the animal, another animal that appears around the animal, a weather condition, and brightness of the surrounding environment.

For example, in a lane line tracking scenario, the sensor 353 may be configured to detect a lane line in front of the vehicle, so that the vehicle can sense a lane change in a traveling process and make real-time driving planning and adjustment for the vehicle based on the lane change.

For example, in an automatic parking scenario, the sensor 353 may be configured to detect a packing place around the vehicle and a size or a location of a surrounding obstacle, so that the vehicle can sense distances to the packing place and the surrounding obstacle and perform collision detection during parking. This prevents the vehicle from colliding with the obstacle.

In some embodiments, the sensor 353 may further sense information related to the vehicle. For example, the sensor 353 may sense information such as a location, a posture, a speed, and a steering angle of the vehicle, so that the vehicle can accurately determine a location of the vehicle relative to another surrounding object or a distance between the vehicle and the another surrounding object such as a pedestrian, an obstacle, or another vehicle. In other words, the vehicle is positioned and a relative location in a surrounding environment is obtained, so as to adjust and plan behavior of the vehicle in real time.

For an autonomous driving vehicle, precise positioning of the vehicle (for example, centimeter-level positioning needs to be implemented during autonomous driving) is a prerequisite for safe and stable driving. High-precision positioning can help a decision-making system plan a driving route in real time, select a proper lane, and handle various traffic conditions, which effectively improves driving quality and enhances driving safety and intelligence. If a vehicle location sensed by the vehicle greatly deviates from an actual location, the vehicle may collide with an obstacle when traveling along a route that is planned based on positioning. Consequently, a serious safety problem occurs.

Conventional positioning technologies mainly include satellite positioning, inertial positioning, radiolocation, visual positioning, and other active or passive positioning means. In actual application, absolute positioning or relative positioning may be implemented through sensors such as a high-precision satellite navigation receiver, an inertial measurement unit, a radar, and vision sensor. However, features of different sensors differ greatly. For example, continuity of the satellite navigation receiver is poor, errors of the inertial measurement unit accumulate with time, and real-time performance of the radar and real-time performance of a visual sensor are poor. Therefore, ideal positioning performance cannot be achieved by using a single sensor. In particular, in a complex urban environment, a sensor is prone to be affected by an environment (for example, weak satellite navigation signal in an underground garage, building blocking, light change, or rainy/foggy weather) in an actual working condition, resulting in a large positioning error or missing positioning information.

Therefore, a multi-sensor fusion technology (or referred to as an integrated positioning technology) is an effective method for accurate, stable, and reliable positioning of the autonomous driving vehicle. The following briefly describes several typical existing fusion positioning technologies.

(1) GNSS/IMU fusion positioning technology

The GNSS/IMU fusion positioning technology performs fusion calculation on a positioning result from a GNSS and a positioning result from an IMU, to obtain a fused positioning result. This fusion positioning technology can achieve centimeter-level positioning precision if a line-of-sight condition of a satellite is good. However, if the line-of-sight condition of the satellite is not satisfied, for example, a multipath effect is caused due to building blockage or no satellite signal is available in an underground garage for a long time, accumulation of system inertial errors is likely to occur. Consequently, the centimeter-level positioning precision cannot be achieved or a vehicle cannot be positioned in a complex urban environment such as an underground garage, a tunnel, or a high-rise building area.

This is because there are biases (which are also referred to as offset errors) for an accelerometer and a gyroscope in the IMU. The accelerometer and the gyroscope output non-zero data even if there is no acceleration or rotation. Displacement data is obtained by performing integration on output data of the accelerometer and the gyroscope. The biases increase during integration. Consequently, an error of integration continuously increases as time progresses. If a GNSS signal is good, the GNSS/IMU fusion positioning technology may continuously correct the biases of the accelerometer and the gyroscope by using a bias estimation value obtained through fusion calculation. Therefore, even if there is no GNSS signal temporarily, the GNSS/IMU may continuously output accurate locations. However, if there is no GNSS signal for a long time (for example, in a garage), the biases of the accelerometer and the gyroscope (which may also be collectively referred to as biases of the IMU) cannot be corrected in real time. The biases drift and continuously deteriorate a positioning result, causing continuous divergence of positioning result. Consequently, a positioning failure occurs.

(2) Visual system/IMU fusion positioning technology

The visual system/IMU fusion positioning technology performs fusion calculation on a relocation result output by a visual system and a positioning result from an IMU, to obtain a fused positioning result; and continuously corrects biases of an accelerometer and a gyroscope by using a bias estimation value obtained through fusion calculation.

The visual system in this fusion positioning technology features fragile relocation, and is easily interfered with by and polluted by an external light environment, which causes a relocation failure. If the visual system cannot output a positioning result or the output positioning result is inaccurate, the biases of the IMU cannot be corrected in real time. As time progresses, the biases of the IMU drift and continuously deteriorate the positioning result, causing continuous divergence of positioning. Consequently, a positioning failure occurs.

(3) GNSS/Radar fusion positioning technology

The GNSS/radar fusion positioning technology performs fusion calculation on a positioning result from a GNSS and a relocation result output by a radar, to obtain a fused positioning result.

This fusion positioning technology is usually used to position a low-speed vehicle (such as a vehicle with a special low-speed campus function), and is inapplicable to some highly dynamic scenarios. This is because an output frequency of the radar is low, and point cloud data is generated. In a movement process, a location of a point cloud deviates from an actual location, and key positioning information is prone to be lost, resulting in low positioning precision and low reliability. In addition, costs in purchasing and maintaining the radar is high, and it is difficult to achieve wide application.

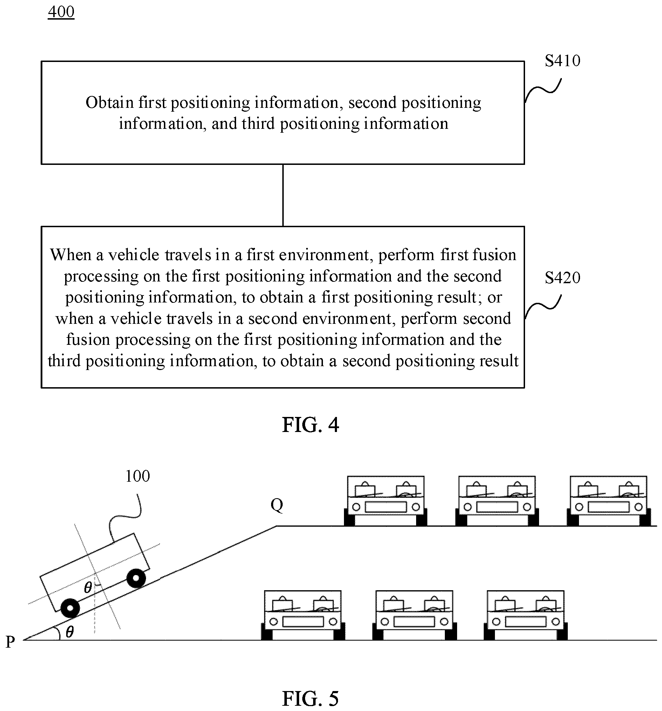

The several multi-sensor fusion technologies described above feature low positioning precision or even cause positioning failures during vehicle positioning. Therefore, an embodiment of this application provides a positioning method for accurate, stable, and reliable positioning of a vehicle, which improves driving safety. The following provides detailed descriptions with reference to FIG. 4 to FIG. 9.

For ease of understanding, the following first explains and describes technical terms in this application.

An inertial positioning technology measures an acceleration and an angular velocity of a vehicle body (such as a vehicle) relative to an inertial coordinate system, and obtains positioning information, such as a location, a speed, and a posture, of the vehicle body through integral calculation. The inertial positioning technology generally measures a motion parameter of the vehicle body by using an inertial sensor (including a gyroscope and an accelerometer). The inertial sensor may be fixedly connected to the vehicle body. The gyroscope is configured to measure a rotational angular velocity of the vehicle body relative to the inertial coordinate system, and the accelerometer is configured to measure an acceleration of the vehicle body relative to the inertial coordinate system. A posture angle and an acceleration of a vehicle body coordinate system relative to the inertial coordinate system are calculated based on a location, a speed, and a posture of the vehicle body at an initial moment. The speed may be obtained by performing integration on the acceleration once, and the location may be obtained by performing integration on the acceleration twice. Inertial positioning can be performed continuously based on information measured by the inertial sensor, and there is no need to receive external information. In addition, inertial positioning is free from external interference. In this embodiment of this application, a manner of positioning performed based on data (that is, inertial navigation data) measured by the inertial sensor is collectively referred to as the inertial positioning technology.

The inertial coordinate system is a reference system established based on Newton's law of motion, and may also be referred to as an inertial reference system or an inertial system. In this embodiment of this application, a geocentric inertial system may be used. To be specific, a center of the earth is used as a coordinate origin, one coordinate axis is along a polar axis (a rotation axis) of the earth, the other two coordinate axes are on an equatorial plane of the earth, and three axes are orthogonal and point to three stars in cosmic space. Physical quantities measured by inertial devices (the gyroscope and the accelerometer) are relative to the inertial system. For example, the gyroscope outputs an angular velocity of the vehicle body coordinate system relative to the inertial coordinate system.

The vehicle body coordinate system is fixedly connected to a vehicle body. A coordinate origin is a mass center of the vehicle body. A first axis (which is also referred to as a longitudinal axis) coincides with a longitudinal symmetry axis of the vehicle body, and a positive direction of the first axis points forward. A second axis (which is also referred to as a vertical axis or an upright axis) is perpendicular to the longitudinal axis in a longitudinal symmetry plane of the vehicle body, and a positive direction of the second axis points upward. A third axis (which is also referred to as a horizontal axis) is perpendicular to the longitudinal symmetry plane of the vehicle body, and a pointing direction of the third axis is determined based on a right-hand system.

A satellite positioning technology uses a satellite to perform accurate positioning to obtain a location, a speed, and a posture of an object.

A visual positioning technology uses a visual sensor such as a camera to obtain surrounding environment information and obtain, after processing is performed, positioning information such as a location, a speed, and a posture. The visual positioning technology may also be referred to as an environment feature matching positioning technology.

Kalman filter (Kalman filter, KF) is an algorithm that uses a linear system state equation (or a state transition equation) to estimate an optimal system state based on input and output observation data of a system. The observation data includes effects of noise and interference in the system. Therefore, an optimal estimation process may also be considered as a filtering process.

Extended Kalman filter (extended Kalman filter, EKF) is an extended form of standard Kalman filter in a nonlinear scenario. A basic idea is to linearize a nonlinear system through Taylor series expansion, and then obtain a state estimate through Kalman filter.

It should be noted that "location information" (such as first location information, second location information, or third location information) or a "location" (such as a first fusion location or a second fusion location) in embodiments of this application includes but is not limited to three-dimensional location coordinates, elevation information, or longitude and latitude information of a vehicle in a world coordinate system, and three-dimensional location coordinates, elevation information, or longitude and latitude information of the vehicle in a road coordinate system.

"Posture information" (such as first posture information, second posture information, or third posture information) or a "posture" (such as a first fusion posture or a second fusion posture) in embodiments of this application includes but is not limited to information such as a yaw angle, a pitch angle, a roll angle, or a quaternion of the vehicle.

"Speed information" (such as first speed information, second speed information, or third speed information) or a "speed" (such as a first fusion speed or a second fusion speed) in embodiments of this application includes but is not limited to information such as a linear speed, a linear acceleration, an angular velocity, and an angular acceleration of the vehicle. The foregoing various speeds may be values in the world coordinate system, or values in a vehicle coordinate system of the vehicle. This is not limited in embodiments of this application.

FIG. 4 is a schematic flowchart of a positioning method according to an embodiment of this application. The method may be performed by a driving apparatus, for example, performed by the vehicle 100 shown in FIG. 1 or an apparatus on the vehicle 100; may be performed by a cloud computing apparatus, for example, performed by the server 200 shown in FIG. 2 or an apparatus on the server 200; or may be performed by a combination of a driving apparatus and a cloud computing apparatus, for example, performed by a system that includes the vehicle 100 shown in FIG. 1 and the server 200 shown in FIG. 2. This is not limited in this embodiment of this application. A method 400 shown in FIG. 4 includes Steps S410 and S420.

Step S410: Obtain first positioning information, second positioning information, and third positioning information.

The first positioning information is obtained based on inertial navigation data. The inertial navigation data herein is data obtained through measurement by an inertial sensor (such as an IMU). The first positioning information may include first location information, first speed information, and first posture information. The first location information describes a relative location of a vehicle, for example, a location at a current moment relative to a previous moment or an initial moment.

There may be a plurality of manners for obtaining the first positioning information. The first positioning information may be obtained only based on the inertial navigation data, or may be obtained with reference to the inertial navigation data and other sensor data. This is not limited in this embodiment of this application.

In an example, the first positioning information may be obtained based on a strapdown inertial navigation algorithm.

Specifically, numerical integration and posture solving processing are performed on inertial data corresponding to the inertial sensor based on the strapdown inertial navigation algorithm, to solve a posture, a speed, and a location of the vehicle to obtain the first positioning information

The inertial sensor includes a gyroscope and an accelerometer, which are respectively configured to measure an angular velocity and an acceleration of the vehicle. In the strapdown inertial navigation algorithm, the gyroscope and the accelerometer are fixedly connected to the vehicle; and a computing apparatus collects output information of the inertial sensor, and performs numerical integration and posture solving, to solve positioning parameters such as the location, the speed, and the posture of the vehicle. Then, the first positioning information can be obtained. For example, the speed may be obtained by performing integration on the acceleration once, the location may be obtained by performing integration on the acceleration twice, and the posture may be obtained by performing posture calculation on the angular velocity.

In the strapdown inertial navigation algorithm, the first positioning information may be obtained only based on the inertial data corresponding to the inertial sensor. A specific calculation process of the strapdown inertial navigation algorithm is the same as that of an existing solution. For brevity, details are not described herein.

In another example, the first positioning information may be obtained based on a dead reckoning (dead reckoning, DR) method.

Specifically, the inertial data corresponding to the inertial sensor and speed data corresponding to the vehicle are processed based on the dead reckoning method, to obtain a traveling direction and a traveling distance of the vehicle; and the traveling direction and the traveling distance are added to an initial location to obtain the first positioning information.

The initial location herein refers to positioning information of a previous moment. In the dead reckoning method, the positioning information (a posture, a speed, and a location) of the previous moment is known, and a moving distance and a moving direction are measured based on output information of the inertial sensor and speed data of the vehicle. Then, positioning information of a next moment can be deduced. For example, location information may be obtained by performing integral calculation on the inertial data corresponding to the inertial sensor, and a state change amount relative to the previous moment may be obtained by processing the speed data. A current location can be calculated by adding a displacement vector to the initial location.

In this embodiment of this application, the speed data corresponding to the vehicle may be obtained through a vehicle speed sensor or an odometer. In the dead reckoning method, the first positioning information is obtained based on the inertial data corresponding to the inertial sensor and the speed data. A specific calculation process is the same as that of an existing solution. For brevity, details are not described herein.

In the foregoing examples, the data corresponding to the inertial sensor may be raw data (that is, the inertial navigation data mentioned above) output by the inertial sensor, or may be data obtained by compensating the raw data output by the inertial sensor (that is, data obtained by compensating the inertial navigation data).

As an example instead of a limitation, the inertial navigation data (that is, the raw data output by the inertial sensor) may be compensated based on a first bias, to obtain compensated inertial sensor data. Then, the first positioning information is obtained based on the compensated inertial sensor data.

In some embodiments, the first bias is obtained based on a temperature and a calculation coefficient that exist when the inertial sensor outputs the raw data. Herein, each piece of raw data output by the inertial sensor may correspond to one first bias. The first bias corresponding to each piece of raw data is used to compensate the raw data.

As an example instead of a limitation, the first bias may be obtained by using the following formula 1-1:

$$\begin{bmatrix} 1 & T_i \end{bmatrix} \bullet \begin{bmatrix} B \\ A \end{bmatrix} = Bias_i \qquad (1\text{-}1)$$

$T_i$ represents a corresponding temperature that exists when the inertial sensor outputs raw data at a moment i, and $Bias_i$ represents a corresponding first bias that exists when the inertial sensor outputs the raw data at the moment i. $Bias_i$ is used to compensate the raw data output by the inertial sensor at the moment i. A and B are calculation coefficients. A manner of obtaining A and B is described below, and details are not provided herein.

Specifically, the formula 1-1 may be expanded into the following formula 1-2:

$$\begin{bmatrix} 1 & T_0 \\ 1 & T_1 \\ \vdots & \vdots \\ 1 & T_n \end{bmatrix} \bullet \begin{bmatrix} B \\ A \end{bmatrix} = \begin{bmatrix} Bias_0 \\ Bias_1 \\ \vdots \\ Bias_n \end{bmatrix} \qquad (1\text{-}2)$$

The raw data output by the inertial sensor includes data obtained by the inertial sensor at moments 0, 1, ..., and n. $T_0$, $T_1$, ..., and $T_n$ are corresponding temperatures that exist when the inertial sensor outputs raw data at the moments 0, 1, ..., and n respectively. Based on the formula 1-2, a corresponding bias that exists when the inertial sensor outputs raw data at each of the moments 0, 1, ..., and n may be obtained. To be specific, $Bias_0$, $Bias_1$, ..., and $Bias_n$ may be obtained. The bias is used to compensate raw data output by the inertial sensor at a corresponding moment. In other words, for any moment i in the moments 0, 1, ..., and n, a corresponding temperature that exists when the inertial sensor outputs the raw data at the moment i is $T_i$. Then, a bias corresponding to the inertial sensor at the moment i may be obtained based on the formula 1-1. In this way, the raw data output by the inertial sensor at the moment i may be compensated based on the bias corresponding to the moment i, to obtain compensated inertial sensor data corresponding to the moment i.

The calculation coefficients A and B in the foregoing formulas 1-1 and 1-2 may be obtained in the following manner.

In an example, the calculation coefficients A and B may be obtained by performing least squares fitting on raw data (such as an angular velocity and/or an acceleration) and a temperature that are output by the inertial sensor in a first time period, where the vehicle is in a non-running state in the first time period.

Herein, that the vehicle is in the non-running state may be understood as: no operation is performed on the vehicle, and the vehicle is in a stopped state. In some embodiments, that the vehicle is in the non-running state may be understood as: the vehicle is in a static state. The "static state" herein is a state entered by the vehicle when a specific condition is met, that is, static or approximately static.

In other words, when the vehicle is in the non-running state, the raw data and the temperature that are output by the inertial sensor in the first time period may be collected, and then least squares fitting is performed, to obtain the calculation coefficients A and B. Specifically, the least squares fitting is performed by using the following formula 1-3:

$$Bias = A \bullet T + B \qquad (1\text{-}3)$$

Bias represents the raw data output by the inertial sensor in the first time period, for example, an angular velocity output by the gyroscope or an acceleration output by the accelerometer. T represents a temperature output by the inertial sensor in the first time period. A and B are the calculation coefficients to be obtained.

In this embodiment of this application, as time progresses, the vehicle may be in the non-running state in a plurality of first time periods. In this case, raw data and a temperature that are output by the inertial sensor in a latest first time period may be constantly collected, and the fitting formula 1-3 is used to update the calculation coefficients A and B.

In this embodiment of this application, the calculation coefficients A and B calculated by using the formula 1-3 may be saved periodically or in real time, or newest calculation coefficients A and B may be saved, so that a system (that is, a system for positioning the vehicle) can use the calculation coefficients A and B next time the system is started.

In another example, the calculation coefficients A and B may be factory default values. For example, the raw data from the inertial sensor needs to be compensated when the system is initialized for a first time. In this case, factory default parameters A and B may be used in the formula 1-1 or 1-2.

In other words, the calculation coefficients may be obtained by performing least squares fitting on the angular velocity and the temperature that are output by the inertial sensor in the first time period, where the vehicle is in the non-running state in the first time period. Alternatively, the calculation coefficients are factory default values.

In some embodiments, the first bias may be an average value of the raw data (such as an average value of angular velocities and/or an average value of accelerations) output by the inertial sensor in the first time period, where the vehicle is in the non-running state in the first time period. For example, right after the system is started, the vehicle is in the non-running state, but the calculation coefficients A and B for the least squares calculation formula 1-1 do not meet a requirement. Theoretically, when the vehicle is in the non-running state, the inertial sensor outputs 0. However, the inertial sensor has a bias. Therefore, when the vehicle is in the non-running state, the inertial sensor generates an angular velocity output and/or an acceleration output. Therefore, raw data output by the vehicle in the first time period may be collected, and an average value of the raw data is calculated as the first bias.

It should be understood that a bias (namely, the first bias) in the foregoing example corresponds to a type of raw data output by the inertial sensor, and is used to compensate raw data of a corresponding type. For example, if the gyroscope outputs an angular velocity, a bias of the gyroscope is an error of the angular velocity, and is used to compensate the angular velocity output by the gyroscope. For example, if the accelerometer outputs an acceleration, the bias of the accelerometer is an error of the acceleration, and is used to compensate the acceleration output by the accelerometer.

In the foregoing example, that the vehicle is in the non-running state in the first time period is a prerequisite for calculating the calculation coefficients A and B and calculating the average value of the raw data output by the inertial sensor in the first time period.

In an example, that the vehicle is in the non-running state in the first time period may be determined based on the following conditions:

a mean square error of angular velocities output by the gyroscope in the first time period is less than a first threshold;
a mean square error of accelerations output by the accelerometer in the first time period is less than a second threshold; and
a speed of the vehicle in the first time period is less than a third threshold.

Herein, the first threshold, the second threshold, and the third threshold may be determined based on an actual scenario. This is not limited in this embodiment of this application.

In another example, that the vehicle is in the non-running state in the first time period may be determined based on the following condition:
a visual sensor obtains a plurality of images in the first time period, where the plurality of images each include a first object, and a location of the first object relative to the vehicle does not change.

The bias of the inertial sensor is caused due to many factors, such as earth rotation, a process error of the inertial sensor, a temperature change, and noise impact. In this embodiment of this application, the first bias may include at least one of a constant bias error, a proportionality factor error, a temperature error, a non-overlapping and non-orthogonal error, and a non-linear error. The constant bias error is a constant error that occurs after a startup, and generally remains unchanged in an entire working process of the startup. The constant bias error may be accurately measured by keeping a static state for a period of time after the startup. The proportionality factor error is caused by a change of a proportionality factor. The temperature error is caused by a temperature change. The non-overlapping and non-orthogonal error is caused by nonorthogonality in a structure of the inertial sensor. The non-linear error is an error caused by nonlinearity of the proportionality factor.

In this embodiment of this application, before the first positioning information is obtained, the raw data output by the inertial sensor may be first compensated, to eliminate a bias caused by some factors. This improves precision of data used to obtain the first positioning information, and correspondingly improves positioning precision of inertial positioning.

The second positioning information is obtained based on satellite positioning data. The satellite positioning data is measured by a global navigation satellite system. The second positioning information may include second location information, second speed information, and second posture information. The second location information describes an absolute location of the vehicle, that is, a location in a geodetic world coordinate system.

In this embodiment of this application, the second positioning information may be obtained by performing satellite positioning on the vehicle by using a GNSS, such as a GPS, a GLONASS satellite navigation system, a Galileo satellite positioning system, or a BeiDou navigation satellite system.

The third positioning information is obtained based on visual positioning data. The visual positioning data is data obtained through measurement by using a visual sensor (such as a camera). In some embodiments, the visual positioning data may alternatively be referred to as image data. The third positioning information may include third location information, third speed information, and third posture information. The third location information may describe a relative location of the vehicle.

Step S420: When the vehicle travels in a first environment, perform first fusion processing on the first positioning information and the second positioning information, to obtain a first positioning result. Alternatively, when the vehicle travels in a second environment, perform second fusion processing on the first positioning information and the third positioning information, to obtain a second positioning result.

Satellite signal quality in the first environment meets a preset quality requirement, and satellite signal quality in the second environment does not meet the preset quality requirement. In this embodiment of this application, the preset quality requirement may include at least one of the following:

a satellite is in an effective positioning state;
a horizontal dilution of precision (dilution of precision, DOP) of the satellite is lower than or equal to a preset precision threshold;
a quantity of satellites in the effective positioning state is greater than or equal to a preset first quantity threshold;
a quantity of satellites whose signal strengths each are greater than or equal to a preset first strength threshold is greater than or equal to a preset second quantity threshold;
a strength of a satellite signal received by the vehicle is greater than or equal to a preset second strength threshold; and
a signal-to-noise ratio (signal-to-noise ratio, SNR) of the vehicle is greater than or equal to a preset signal-to-noise ratio threshold.

The preset precision threshold, the first quantity threshold, the second quantity threshold, the first strength threshold, the second strength threshold, and the signal-to-noise ratio threshold may be determined based on an actual requirement. This is not specifically limited in this embodiment of this application.

When the vehicle travels in the first environment, a satellite signal in the first environment is good. In this case, fusion processing may be performed on the first positioning information obtained based on the inertial navigation data and the second positioning information obtained based on the satellite positioning data, to obtain fused positioning information, that is, the first positioning result. Herein, the first positioning result may include a first fusion location, a first fusion speed, and a first fusion posture that are obtained through first fusion processing.

When the vehicle travels in the second environment, a satellite signal in the second environment is poor. In this case, fusion processing may be performed on the first positioning information obtained based on the inertial navigation data and the third positioning information obtained based on the visual positioning data, to obtain fused positioning information, that is, the second positioning result. Herein, the second positioning result may include a second fusion location, a second fusion speed, and a second fusion posture that are obtained through second fusion processing.

For example, Step S420 may specifically include:

when the vehicle travels in the first environment, performing extended Kalman filter processing on the first positioning information and the second positioning information based on a state transition equation, a first measurement equation, and a second measurement equation, to obtain the first positioning result; or
when the vehicle travels in the second environment, performing extended Kalman filter EKF processing on the first positioning information and the third positioning information based on a state transition equation, a first measurement equation, and a third measurement equation, to obtain the second positioning result.

Observation data of the first measurement equation comes from the inertial sensor, observation data of the second measurement equation comes from the global navigation satellite system, and observation data of the third measurement equation comes from the visual sensor.

Specifically, when the vehicle travels in the first environment, a process of performing extended Kalman filter processing on the first positioning information and the second positioning information may include:

performing state estimation based on the state transition equation, to obtain a predicted positioning result;
obtaining, based on the first measurement equation and the first positioning information, a positioning result measured by the inertial sensor;
obtaining, based on the second measurement equation and the second positioning information, a positioning result measured by the global navigation satellite system; and
correcting the predicted positioning result based on the positioning result measured by the inertial sensor and the positioning result measured by the global navigation satellite system, to obtain the first positioning result.

Specifically, when the vehicle travels in the second environment, a process of performing extended Kalman filter processing on the first positioning information and the third positioning information may include:

performing state estimation based on the state transition equation, to obtain a predicted positioning result;
obtaining, based on the first measurement equation and the first positioning information, a positioning result measured by the inertial sensor;
obtaining, based on the third measurement equation and the third positioning information, a positioning result measured by the visual sensor; and
correcting the predicted positioning result based on the positioning result measured by the inertial sensor and the positioning result measured by the visual sensor, to obtain the second positioning result.

In other words, when fusion processing is performed on positioning information obtained in different positioning manners, a predicted positioning result is actually corrected based on positioning results measured by at least two types of sensors, to obtain a more accurate positioning result.

In an embodiment, the state transition equation is:

$$\dot{\delta x} = F\delta x + w, \quad w \sim N\left(0, \; Q\right) \tag{2-1}$$

$\dot{\delta x}$ represents a predicted value (or referred to as a preset system state variable) of a system state, **F** represents a system state matrix, $\delta x$ represents a system state variable (that is, a real value), and W represents control noise (or referred to as an error or noise), where W is subject to Gaussian distribution of (0, **Q**), and **Q** represents a covariance matrix of the control noise.

The system state variable $\delta x$ may be expressed by using the following matrix:

$$\delta x = \begin{bmatrix} \delta p_N & \delta p_E & \delta s & \delta\varphi_N & \delta\varphi_E & \delta\varphi_D & \varepsilon_x & \varepsilon_y & \varepsilon_z \end{bmatrix}^T$$

$\delta p_N$ represents a northbound location, $\delta p_E$ represents an eastbound location, $\delta s$ represents a vehicle speed scale factor, $\delta\varphi_N$ represents a roll angle, $\delta\varphi_E$ represents a pitch angle, $\delta\varphi_D$ represents a yaw angle, and $\varepsilon_x$, $\varepsilon_y$, and $\varepsilon_z$ represent biases of the gyroscope on three axes (that is, an x-axis, a y-axis, and a z-axis).

Correspondingly, the control noise W may include an error corresponding to the system state variable, such as a northbound location error, an eastbound location error, a vehicle speed scale factor error, a roll angle error, a pitch angle error, or a yaw angle error.

A component form of the system state matrix **F** is:

$$F = \begin{bmatrix}
0 & 0 & C_b^n(1,1)u_{odo} & 0 & -C_b^n(3,1)su_{odo} & C_b^n(2,1)su_{odo} & 0 & 0 & 0 \\
0 & 0 & C_b^n(2,1)u_{odo} & C_b^n(3,1)su_{odo} & 0 & -C_b^n(1,1)su_{odo} & 0 & 0 & 0 \\
0 & 0 & -1/\tau_1 & 0 & 0 & 0 & 0 & 0 & 0 \\
F1(1,1) & 0 & 0 & 0 & F2(1,2) & F2(1,3) & -C_b^n(1,1) & -C_b^n(1,2) & -C_b^n(1,3) \\
F1(2,1) & 0 & 0 & F2(2,1) & 0 & F2(2,3) & -C_b^n(2,1) & -C_b^n(2,2) & -C_b^n(2,3) \\
F1(3,1) & 0 & 0 & F2(3,1) & F2(3,2) & 0 & -C_b^n(3,1) & -C_b^n(3,2) & -C_b^n(3,3) \\
0 & 0 & 0 & 0 & 0 & 0 & -1/\tau_2 & 0 & 0 \\
0 & 0 & 0 & 0 & 0 & 0 & 0 & -1/\tau_2 & 0 \\
0 & 0 & 0 & 0 & 0 & 0 & 0 & 0 & -1/\tau_2
\end{bmatrix}$$

$C_b^n$ represents a direction cosine matrix, $u_{odo}$ represents a speed, S represents a speed scale factor, $\tau_1$ and $\tau_2$ respectively represent first-order Markov time constants at time points before and after state transition, and F1 and F2 are parameters.

The direction cosine matrix $C_b^n$ is a 3x3 matrix, and a column represents a projection of a unit vector in a vehicle body coordinate system in a reference coordinate system (such as a navigation coordinate system). A component form of $C_b^n$ is:

$$C_b^n = \begin{bmatrix} C_{11} & C_{12} & C_{13} \\ C_{21} & C_{22} & C_{23} \\ C_{31} & C_{32} & C_{33} \end{bmatrix}$$

In this matrix, an element $C_b^n(i,j)$ in an $i^{th}$ row and a $j^{th}$ column represents a cosine of an included angle between an i-axis of the reference coordinate system and a j-axis of the vehicle body coordinate system. For example, a value of $C_b^n(1,1)$ in the system state matrix **F** indicates a component $C_{11}$ in the matrix $C_b^n$. A method for calculating $C_b^n$ is the same as an existing method. The following is merely an example for description.

For example, the vehicle body coordinate system is a "right-front-up" coordinate system, the reference coordinate system is an "east-north-up" coordinate system, and a rotation sequence of an Euler angle is defined as 3-1-2 (yaw angle-pitch angle-roll angle), where the yaw angle is positive in a direction of north by west. Based on a definition of "east-north-up 312" for the Euler angle, a direction cosine matrix for conversion from a geographic coordinate system (which is used as a navigation system, that is, an n system) to the vehicle body coordinate system (that is, a b system) is:

$$\mathbf{C}_b^n = \mathbf{C}_\psi \mathbf{C}_\theta \mathbf{C}_\gamma = \begin{bmatrix} \cos\psi & -\sin\psi & 0 \\ \sin\psi & \cos\psi & 0 \\ 0 & 0 & 1 \end{bmatrix} \begin{bmatrix} 1 & 0 & 0 \\ 0 & \cos\theta & -\sin\theta \\ 0 & \sin\theta & \cos\theta \end{bmatrix} \begin{bmatrix} \cos\gamma & 0 & \sin\gamma \\ 0 & 1 & 0 \\ -\sin\gamma & 0 & \cos\gamma \end{bmatrix}$$

$$= \begin{bmatrix} \cos\psi\cos-\sin\psi\sin\theta\sin\gamma & -\sin\psi\cos\theta & \cos\psi\sin\gamma+\sin\psi\sin\theta\cos\gamma \\ \sin\psi\cos\gamma+\cos\psi\sin\theta\sin\gamma & \cos\psi\cos\theta & \sin\psi\sin\gamma-\cos\psi\sin\theta\cos\gamma \\ -\cos\theta\sin\gamma & \sin\theta & \cos\theta\cos\gamma \end{bmatrix}$$

$$= \begin{bmatrix} C_{11} & C_{12} & C_{13} \\ C_{21} & C_{22} & C_{23} \\ C_{31} & C_{32} & C_{33} \end{bmatrix}$$

$\gamma$ represents a roll angle, $\theta$ represents a pitch angle, and $\psi$ represents a yaw angle.

F1 is a 1x3 matrix, and F2 is a 3x3 matrix. Component forms of F1 and F2 are:

$$F1 = \begin{bmatrix} \dfrac{1}{R_m+h}(\Omega_D - \dfrac{\rho_N R_t}{R_t+h}) \\ -\dfrac{\rho_E R_m}{(R_m+h)^2} \\ \dfrac{1}{R_m+h}(-\Omega_N - \rho_N\sec^2 L - \dfrac{\rho_D R_t}{R_t+h}) \end{bmatrix}; \qquad F2 = \begin{bmatrix} 0 & \Omega_D+\rho_D & -\rho_E \\ -\Omega_D-\rho_D & 0 & \Omega_N+\rho_N \\ \rho_E & -\Omega_N-\rho_N & 0 \end{bmatrix}$$

$R_m$ and $R_t$ represent radii of the earth in a major axis direction and a minor axis direction respectively, h represents an elevation, $\Omega_D$ and $\Omega_N$ represent downward and northward platform posture angles respectively, $\rho_N$, $\rho_D$,

and $\rho_E$ represent northward, downward, and eastward angle increments respectively, and L represents latitude.

F1(3,1) in the system state matrix **F** indicates a component in a third row and a first column of the matrix F1. F2(2,2) in the system state matrix **F** indicates a component in a second row and a second column of the matrix F2. Others are similar, and details are not described herein.

In this embodiment of this application, basic formulas of the first measurement equation, the second measurement equation, and the third measurement equation may be the same, but parameter values in the formulas vary with observation data sources. The basic formula may be:

$$\delta_z = \mathbf{H}\delta\mathbf{x} + \eta, \quad \eta \sim N(0, \ \mathbf{R}) \tag{3-1}$$

$\delta_z$ represents a measured system state variable (that is, a value obtained through measurement), **H** represents a system measurement matrix, $\delta x$ represents a system state variable, and $\eta$ represents observational noise (or referred to as an error or noise), where $\eta$ is subject to Gaussian distribution of (0, **R**), and **R** represents a covariance matrix of the observational noise.

In an embodiment, data of the first measurement equation comes from the inertial sensor. The first measurement equation is:

$$\delta_{Z1} = \mathbf{H}_1\delta\mathbf{x} + \eta_1$$
$$= \begin{bmatrix} \phi_{DR} & \theta_{DR} \end{bmatrix}^T - \begin{bmatrix} \phi_{acc} & \theta_{acc} \end{bmatrix}^T \tag{4-1}$$

$\delta_{z1}$ represents a measured system state variable, $H_1$ represents a system measurement matrix, $\delta x$ represents a system state variable, and $\eta_1$ represents observational noise of an accelerometer model, where $\eta_1$ is subject to Gaussian distribution of (0, **R**). $\phi_{DR}$ represents a roll angle calculated through DR, $\theta_{DR}$ represents a pitch angle calculated through DR, $\phi_{acc}$ represents a roll angle calculated by the accelerometer, and $\theta_{acc}$ represents a pitch angle calculated by the accelerometer.

Correspondingly, the observational noise $\eta_1$ of the accelerometer model may include an error corresponding to the system state variable, such as a northbound location error, an eastbound location error, a vehicle speed scale factor error, a roll angle error, a pitch angle error, or a yaw angle error.

A component form of the system measurement matrix $H_1$ is:

$$\mathbf{H}_1 = \begin{bmatrix} \mathbf{0}_{1\times3} & \begin{bmatrix} -\dfrac{\cos\psi}{\cos\theta} & -\dfrac{\sin\psi}{\cos\theta} & 0 \end{bmatrix} & \mathbf{0}_{1\times3} \\ \mathbf{0}_{1\times3} & \begin{bmatrix} \sin\psi & -\cos\psi & 0 \end{bmatrix} & \mathbf{0}_{1\times3} \end{bmatrix}$$

$\theta$ represents a pitch angle, and $\psi$ represents a yaw angle.

The roll angle $\phi_{acc}$ and the pitch angle $\theta_{acc}$ that are calculated by the accelerometer may be calculated by using the following formulas:

$$\phi_{acc} = \tan^{-1}\left(\frac{f_y}{f_z}\right) \tag{4-2}$$

$$\theta_{acc} = \tan^{-1}\left(\frac{f_x}{\sqrt{f_y^2 + f_z^2}}\right) \tag{4-3}$$

$f_y$, $f_z$, and $f_x$ represent output proportions of the accelerometer in three axis directions respectively.

In an embodiment, data of the second measurement equation comes from the global navigation satellite system. The second measurement equation is:

$$\delta_{Z2} = \mathbf{H}_2 \delta \mathbf{x} + \eta_2$$

$$= \begin{bmatrix} \mathbf{p}_{DR}^T & v_{DR} & \psi_{DR} \end{bmatrix}^T - \begin{bmatrix} \mathbf{p}_{GNSS}^T & v_{GNSS} & \psi_{GNSS} \end{bmatrix}^T \tag{5-1}$$

$\delta_{Z2}$ represents a measured system state variable, $\mathbf{H}_2$ represents a system measurement matrix, $\delta \mathbf{x}$ represents a system state variable, and $\eta_2$ represents observational noise of a global navigation satellite system model, where $\eta_2$ is subject to Gaussian distribution of $(0, \mathbf{R})$. $\mathbf{p}_{DR}$ represents a location calculated through DR, $v_{DR}$ represents a speed calculated through DR, and $\psi_{DR}$ represents a yaw angle calculated through DR. $\mathbf{p}_{GNSS}$ represents a location measured by the GNSS, $v_{GNSS}$ represents a speed measured by the GNSS, and $\psi_{GNSS}$ represents a yaw angle measured by the GNSS.

Correspondingly, the observational noise $\eta_2$ of the global navigation satellite system model may include an error corresponding to the system state variable, such as a northbound location error, an eastbound location error, a vehicle speed scale factor error, a roll angle error, a pitch angle error, or a yaw angle error.

A component form of the system measurement matrix $\mathbf{H}_2$ is:

$$\mathbf{H}_2 = \begin{bmatrix} \mathbf{I}_{2\times2} & \mathbf{0}_{2\times1} & \mathbf{0}_{2\times3} & \mathbf{0}_{2\times3} \\ \mathbf{0}_{1\times2} & u_{odo} & \mathbf{0}_{1\times3} & \mathbf{0}_{1\times3} \\ \mathbf{0}_{1\times2} & 0 & \begin{bmatrix} \tan\theta\cos\psi & \tan\theta\sin\psi & -1 \end{bmatrix} & \mathbf{0}_{1\times3} \end{bmatrix}$$

$u_{odo}$ represents a speed, $\theta$ represents a pitch angle, $\psi$ represents a yaw angle, and I represents an identity matrix.

A component form of the location $\mathbf{p}_{GNSS}$ measured by the GNSS is:

$$\mathbf{p}_{GNSS} = \begin{bmatrix} p_N & p_E \end{bmatrix}^T$$

$p_N$ represents a northbound location, and $p_E$ represents an eastbound location.

The speed $v_{DR}$ calculated through DR can be calculated by using the following formula:

$$v_{DR} = su_{odo} \tag{5-2}$$

S represents a speed scale factor, and $u_{odo}$ represents a speed.

In addition, a location may be calculated based on other data. For example, the location may be represented as:

$$\dot{\mathbf{p}} = \begin{bmatrix} \dot{p}_N & \dot{p}_E \end{bmatrix}^T$$

$$= \mathbf{v}^n = \mathbf{C}_b^n \begin{bmatrix} su_{odo} & 0 \end{bmatrix}^T \tag{5-3}$$

$\dot{\mathbf{p}}$ represents an estimation value (or referred to as a calculation value) of the location, $\dot{p}_N$ represents an estimated northbound location, $\dot{p}_E$ represents an estimated eastbound location, $\mathbf{C}_b^n$ represents a direction cosine matrix, S represents a speed scale factor, and $u_{odo}$ represents a speed.

In an embodiment, data of the third measurement equation comes from the visual sensor. The third measurement equation is:

$$\delta_{Z3} = \mathbf{H}_3 \delta \mathbf{x} + \eta_3$$

$$= \begin{bmatrix} \mathbf{p}_{DR}^{T} & \psi_{DR} \end{bmatrix}^{T} - \begin{bmatrix} \mathbf{p}_{Cam}^{T} & \psi_{Cam} \end{bmatrix}^{T} \tag{6-1}$$

$\delta_{Z3}$ represents a measured system state variable, $\mathbf{H}_3$ represents a system measurement matrix, $\delta \mathbf{x}$ represents a system state variable, and $\eta_3$ represents observational noise of a camera model, where $\eta_3$ is subject to Gaussian distribution of $(0, \mathbf{R})$. $\mathbf{p}_{DR}$ represents a location calculated through DR, and $\psi_{DR}$ represents a yaw angle calculated through DR. $\mathbf{p}_{Cam}$ represents a location measured by the camera, and $\psi_{Cam}$ represents a yaw angle measured by the camera.

Correspondingly, the observational noise $\eta_3$ of the camera model may include an error corresponding to the system state variable, such as a northbound location error, an eastbound location error, a vehicle speed scale factor error, a roll angle error, a pitch angle error, or a yaw angle error.

A component form of the system measurement matrix $H_3$ is:

$$\mathbf{H}_3 = \begin{bmatrix} \mathbf{I}_{2\times2} & \mathbf{0}_{2\times1} & \mathbf{0}_{2\times3} & \mathbf{0}_{2\times3} \\ \mathbf{0}_{1\times2} & 0 & [\tan\theta\cos\psi & \tan\theta\sin\psi & -1] & \mathbf{0}_{1\times3} \end{bmatrix}$$

$\theta$ represents a pitch angle, $\psi$ represents a yaw angle, and I represents an identity matrix.

A component form of the location $\mathbf{p}_{Cam}$ measured by the camera is:

$$\mathbf{p}_{Cam} = \begin{bmatrix} p_N & p_E \end{bmatrix}^{T}$$

$p_N$ represents a northbound location, and $p_E$ represents an eastbound location.

In addition, a location may be calculated based on other data. For example, an estimation value of the location may be expressed as:

$$\dot{\mathbf{p}} = \begin{bmatrix} \dot{p}_N & \dot{p}_E \end{bmatrix}^{T}$$

$$= \mathbf{v}^n = \mathbf{C}_b^n \begin{bmatrix} s u_{odo} & 0 \end{bmatrix}^{T} \tag{6-2}$$

$\dot{\mathbf{p}}$ represents the estimation value (or referred to as a calculation value) of the location, $\dot{p}_N$ represents an estimated northbound location, $\dot{p}_E$ represents an estimated eastbound location, $\mathbf{C}_b^n$ represents a direction cosine matrix, S represents a speed scale factor, and $u_{odo}$ represents a speed.

It should be noted that when the state transition equation, the first measurement equation, the second measurement equation, and the third measurement equation provided in this embodiment of this application are used for performing extended Kalman filter, state variables estimated by using the state transition equation are fixed, but state variables measured by using the measurement equation vary with measurement methods. In addition, in the method provided in this embodiment of this application, an estimated or measured state variable is different from that in an existing solution. For a specific application or calculation manner, refer to a conventional manner or an existing solution. Details are not described herein.

In some other embodiments, the first fusion processing and the second fusion processing performed in Step S420 may alternatively be performed in another manner, for example, performed through Kalman filter or unscented Kalman filter.

In some embodiments, in Step S420, when the vehicle travels in the first environment or the second environment, an estimated error of at least one parameter is obtained after the extended Kalman filter EKF processing is performed. The estimated error of the at least one parameter is used to correct a value of the at least one parameter.

The at least one parameter includes one or more of a northbound location, an eastbound location, a speed scale factor, a speed, a roll angle, a pitch angle, a yaw angle, and an angular velocity output by the gyroscope.

Correspondingly, the estimated error of the at least one parameter may include one or more of a northbound location error, an eastbound location error, a speed scale factor error, a roll angle error, a pitch angle error, a yaw angle error, a gyroscope bias, and the like.

In some embodiments, the at least one parameter includes the speed scale factor, and the estimated error of the at least one parameter includes the speed scale factor error. In this way, after Step S420 is performed, the speed scale factor may be corrected based on the speed scale factor error, to obtain a corrected speed scale factor; and then a speed of the vehicle is obtained based on the corrected speed scale factor. In this way, vehicle speed correction is completed, and a more accurate speed can be obtained. When the speed is subsequently used to obtain positioning information through dead reckoning, precision of inertial positioning can be improved, and a final positioning result obtained through fusion calculation can be improved. In some embodiments, the estimated error of the at least one parameter includes a second bias, where the second bias is used to correct the raw data output by the inertial sensor. Herein, the second bias may include a random error.

For example, the second bias includes the gyroscope bias, and the gyroscope bias is used to correct the angular velocity output by the gyroscope. A correction process of another parameter is similar, and details are not described herein.

In some embodiments, the first positioning result or the second positioning result includes a speed (such as the first fusion speed or the second fusion speed described above) and a posture (such as the first fusion posture or the second fusion posture described above) of the vehicle. The posture includes a pitch angle.

Correspondingly, after Step S420 is performed, the method 400 further includes: determining a displacement value of the vehicle in a traveling time period based on the speed of the vehicle and the traveling time period; and determining an elevation variation of the vehicle in the traveling time period based on the pitch angle and the displacement value.

Whether the vehicle moves uphill or downhill may be determined based on the pitch angle of the vehicle, and a longitudinal height of the vehicle relative to an initial location may be determined based on the elevation variation. In this way, in a scenario in which a satellite signal is poor, for example, in an underground garage, in an urban canyon, under a viaduct, or in a tunnel, this method can be used to accurately identify whether the vehicle is switched between locations of different heights. For example, in an underground garage scenario, it can be determined whether the vehicle moves to an upper or a lower story of the garage. In a viaduct scenario, it can be determined whether the vehicle moves to or from the viaduct.

For ease of understanding, the following provides explanations and descriptions with reference to FIG. 5. As shown in FIG. 5, for example, a vehicle 100 is in a multistory garage. If a satellite signal in the garage is weak, in Step S420, the second fusion processing is performed on the first positioning information obtained based on the inertial navigation data and the third positioning information obtained based on the visual positioning data, to obtain a second positioning result of the vehicle 100. The second positioning result includes a speed, a posture, and a location of the vehicle 100. In a process in which the vehicle 100 moves from a location P to a location Q, speeds, postures, and locations corresponding to different locations may be obtained.

Whether the vehicle 100 moves uphill or downhill may be determined based on a pitch angle $\theta$ of the vehicle. For example, if the pitch angle $\theta$ is greater than 0, it indicates that the vehicle moves uphill. If the pitch angle $\theta$ is less than 0, it indicates that the vehicle moves downhill. The pitch angle $\theta$ may be considered as a slope angle of a location of the vehicle 100.

A displacement value of the vehicle 100 from the location P to the location Q may be determined based on the speed of the vehicle 100 and a traveling time period for the vehicle 100 to move from the location P to the location Q. If the vehicle 100 moves at a uniform speed, the displacement value of the vehicle 100 may be obtained by multiplying the speed by the traveling time period. If the vehicle 100 moves at different speeds at different locations, a displacement value between two adjacent track points may be obtained by multiplying a speed by a sampling interval, and the displacement value of the vehicle from the location P to the location Q may be obtained by adding up all displacement values of the vehicle between adjacent track points.

A longitudinal height (that is, an elevation variation) of the vehicle 100 from the location P to the location Q may be determined based on the pitch angle $\theta$ of the vehicle and the displacement value of the vehicle 100 from the location P to the location Q. If the pitch angle $\theta$ of the vehicle is constant, the elevation variation of the vehicle 100 may be obtained by multiplying the (displacement value by $\sin\theta$). If the pitch angles $\theta$ of the vehicle 100 at different locations are different, an elevation variation between two adjacent track points may be obtained by multiplying (a displacement value between the adjacent track points by·$\sin\theta$). In this case, a longitudinal height of the vehicle from the location P to the location Q may be obtained by adding up all elevation variations of the vehicle between adjacent track points.

It should be understood that the longitudinal height of the vehicle 100 from the location P to the location Q may alternatively be determined in another manner. For example, the foregoing calculation of a related parameter for adjacent track points is changed to calculation of a related parameter for track points that are spaced by three, five, or eight track points. In this way, the elevation variation of the vehicle 100 may also be determined. This is not specifically limited in this embodiment of this application.

Based on the longitudinal height of the vehicle 100 from the location P to the location Q, it may be determined whether the vehicle 100 moves to an upper or a lower story of the garage. Therefore, it may be determined whether the vehicle 100 is switched between stories of different heights. Further, a specific story that is of the multistory garage and in which the vehicle 100 is located may be determined.

In this way, fusion processing is performed on the positioning information obtained based on the inertial navigation data and the positioning information obtained based on the visual positioning data, to output a speed and a pitch angle. Then, a slope angle and a longitudinal height of the vehicle 100 are estimated based on the speed, the pitch angle, and a traveling time period, so as to identify a location of the vehicle 100 in an elevation. In this way, whether the vehicle is switched between locations of different elevations and how switching is performed can also be accurately identified in a place in which a satellite signal is poor. This can improve positioning accuracy of the vehicle and driving safety of the vehicle.

Compared with an existing solution, the foregoing state transition equation for EKF can include an additional parameter for a speed scale factor error, so that the speed scale factor error can be estimated. The speed scale factor error is used to correct a speed scale factor, which can improve measurement accuracy of a vehicle speed.

In this embodiment of this application, different integrated positioning methods may be used when the vehicle travels in different environments. In an environment in which a satellite signal is good, a positioning manner that integrates satellite positioning with inertial positioning may be used. In an environment in which a satellite signal is poor (such as a scenario of a multipath area or a scenario in which a satellite signal is severely blocked, for example, in a tunnel, in an urban canyon, or under a viaduct), a positioning manner that integrates inertial positioning with visual positioning may be used. In this way, even if a satellite signal is poor, the vehicle can still be positioned in a stable, reliable, and accurate manner. This improves driving safety of the vehicle.

Specifically, measurement equations that respectively correspond to inertial positioning, satellite positioning, and visual positioning may be set. During fusion processing, different measurement equations may be selected and switched based on a traveling environment of the vehicle, to obtain a fused positioning information.

In this embodiment of this application, the raw data output by the inertial sensor may be dynamically compensated in real time, to reduce impact of a bias on positioning and improve positioning performance and positioning precision.

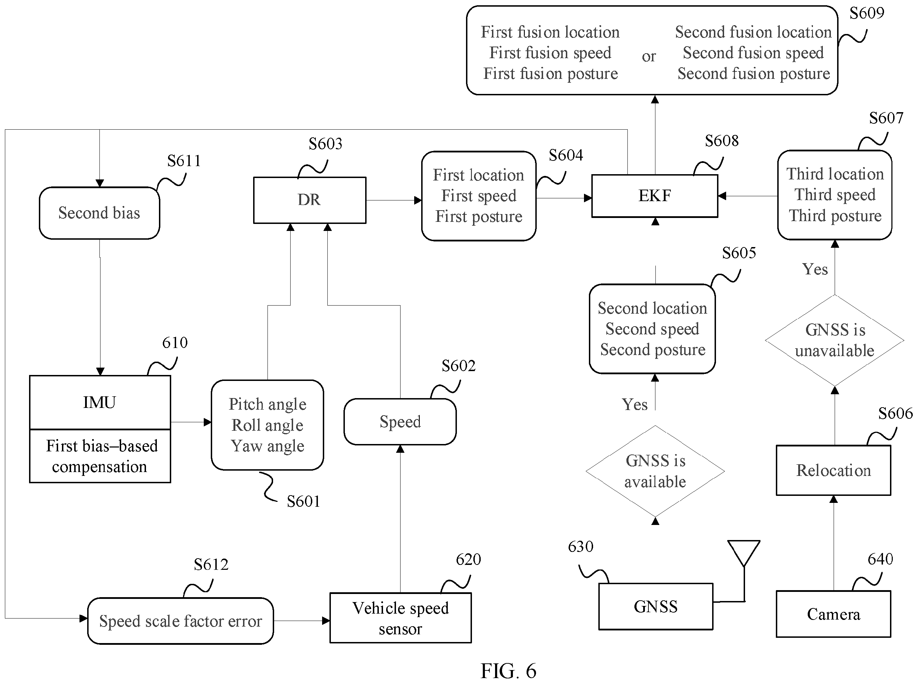

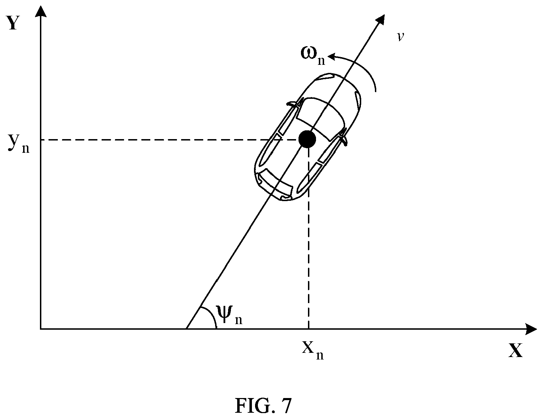

For a better understanding of this application, the following provides a specific but nonrestrictive example with reference to FIG. 6 and FIG. 7 to describe a positioning method provided in an embodiment of this application.

FIG. 6 is a schematic flow block diagram of a positioning method according to an embodiment of this application. For example, in FIG. 6, related data for inertial positioning is obtained by using an inertial measurement unit (inertial measurement unit, IMU) 610 and a vehicle speed sensor 620, related data for satellite positioning is obtained by using a global navigation satellite system GNSS 630, and related data for visual positioning is obtained by using a camera 640.

As shown in FIG. 6, in Step S601, the IMU 610 outputs a pitch angle, a roll angle, and a yaw angle, where raw data output by the IMU 610 is dynamically compensated in real time based on a first bias. Correspondingly, in Step S602, the vehicle speed sensor 620 outputs a speed of a vehicle. In Step S603, dead reckoning DR processing is performed on data output by the IMU 610 and the vehicle speed sensor 620. In Step S604, first positioning information is output, where the first positioning information includes a first location, a first speed, and a first posture.

As an example instead of a limitation, an implementation method of DR in Step S603 is shown in FIG. 7. $\psi_n$ represents a yaw angle that is of the vehicle at a moment n and that is obtained in Step S601, and $\omega_n$ represents an angular velocity that is of the vehicle at the moment n and that is measured by the IMU 610. v represents the speed obtained in Step S602. $(x_n, y_n)$ represents a location of the vehicle at the moment n, and dt represents a sampling interval. In this case, positioning information of the vehicle at a moment n+1 may be calculated by using the following formulas:

$$x_{n+1} = x_n + v \cdot dt \cdot \cos \psi_n \tag{7-1}$$

$$y_{n+1} = y_n + v \cdot dt \cdot \sin \psi_n \tag{7-2}$$

$$\psi_{n+1} = \psi_n + \omega \cdot dt \tag{7-3}$$

Formulas 7-1 and 7-2 are used to calculate a location $(x_{n+1}, y_{n+1})$ of the vehicle at the moment n+1, and a formula 7-3 is used to calculate a yaw angle of the vehicle at the moment n+1.

When the vehicle travels in a first environment, for example, the GNSS is available, the GNSS 630 outputs second positioning information in Step S605. The second positioning information includes a second location, a second speed, and a second posture. Then, in Step S608, EKF processing is performed on the first positioning information output in Step S604 and the second positioning information output in Step S605, to output a first positioning result. The first positioning result includes a first fusion location, a first fusion speed, and a first fusion posture.

When the vehicle travels in a second environment, for example, the GNSS is unavailable, relocation processing is performed on image data obtained by the camera 640 in Step S606, and third positioning information is output in S607. The third positioning information includes a third location, a third speed, and a third posture. Then, in Step S608, EKF processing is performed on the first positioning information output in Step S604 and the third positioning information output in Step S607, to output a second positioning result in Step S609. The second positioning result includes a second fusion location, a second fusion speed, and a second fusion posture.

Regardless of whether the vehicle travels in the first environment or the second environment, a second bias may be further output in Step S608. The second bias may be used to correct, in Step S611, data output by the IMU 610. In Step S608, a speed scale factor error may be further output, where the speed scale factor error is used to correct, in Step S612, data output by the vehicle speed sensor 620.

It should be understood that step numbers shown in FIG. 6 are merely used to indicate different steps, and do not limit an execution sequence of the steps. For example, Steps S601 and S602 may be performed simultaneously or sequentially; and Steps S604, S605, and S607 may be performed simultaneously or sequentially.

In this embodiment of this application, whether the GNSS 630 is available may be determined in any step before Step S608. For example, after the first positioning information, the second positioning information, and the third positioning information are obtained, a traveling environment of the vehicle (that is, whether the GNSS is available, or whether satellite signal quality meets a preset quality requirement) may be determined. Then, two specific positioning manners to be integrated are determined based on the traveling environment of the vehicle. Alternatively, the traveling environment of the vehicle may be first determined before the method shown in FIG. 5 is performed. Then, two specific positioning manners to be integrated are determined based on the traveling environment of the vehicle, and corresponding positioning information is obtained.

In this embodiment of this application, regardless of whether the vehicle travels in the first environment or the second environment, the first bias may be used to correct, in real time, the data output by the IMU 610, to implement continuous and stable positioning. The first bias may be obtained by using the method shown in FIG. 4. To be specific, the first bias may be obtained by using the formula 1-1 or 1-2. Alternatively, an average value of raw data output by the inertial sensor in a first time period is used as the first bias. The first bias may be obtained in different manners in different scenarios.

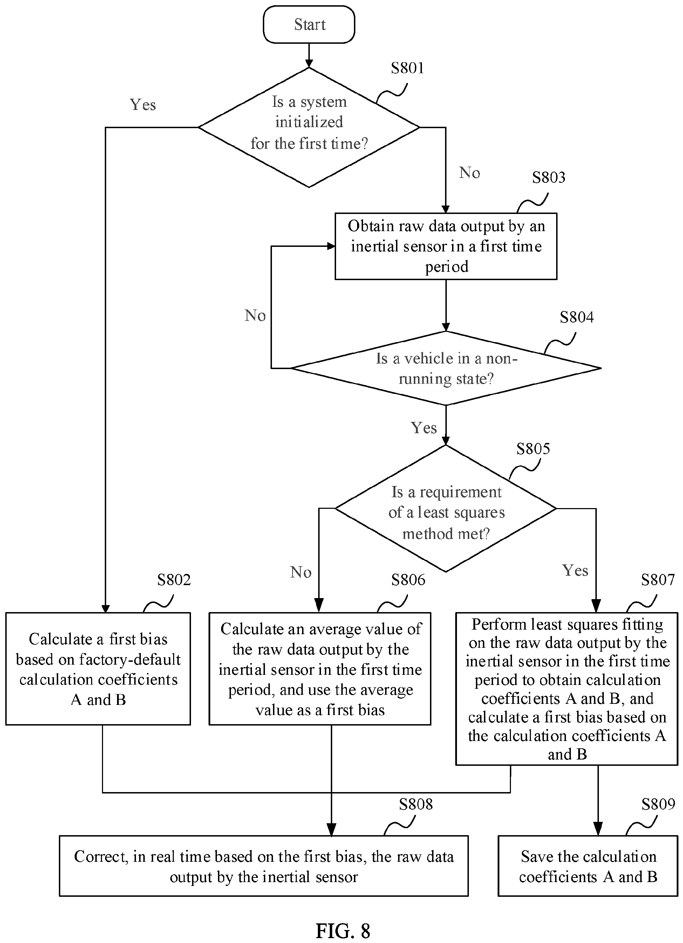

FIG. 8 is a schematic flowchart of a method for correcting raw data from an inertial sensor according to an embodiment of this application. The following describes a manner of obtaining the first bias with reference to FIG. 8.

Step S801: Determine whether a system is initialized for a first time.

If the system is initialized for the first time, Step S802 is performed to calculate the first bias based on factory-default calculation coefficients A and B. To be specific, the factory-default calculation coefficients A and B are substituted into a formula 1-1 or 1-2 to calculate the first bias.

If the system is not initialized for the first time, Step S803 is performed to obtain raw data output by the inertial sensor in a first time period.

Step S804: Determine whether a vehicle is in a non-running state.

If the vehicle is not in the non-running state, return to a previous step, for example, repeat Step S803.

If the vehicle is in the non-running state, Step 805 is performed to determine whether a requirement of a least squares method is met.

If the requirement of the least squares method is not met, Step S806 is performed to calculate an average value of the raw data output by the inertial sensor in the first time period, and use the average value as the first bias. It should be understood that the average value of the raw data herein is an average value of raw data of a same type or from a same sensor. For example, an average value of angular velocities output by a gyroscope is calculated and used as a first bias of the gyroscope. For example, an average value of accelerations output by an accelerometer is calculated and used as a first bias of the accelerometer.

If the requirement of the least squares method is met, Step S807 is performed to perform least squares fitting on the raw data output by the inertial sensor in the first time period to obtain calculation coefficients A and B, and calculate the first bias based on the calculation coefficients A and B. For example, in Step S807, fitting may be performed based on a formula 1-3, to calculate the calculation coefficients A and B.

After the first bias is obtained, that is, after Step S802, S806, or S807 is performed, Step S808 is performed to correct, in real time based on the first bias, the raw data output by the inertial sensor. It should be understood that the "raw data output by the inertial sensor" herein is data used for positioning, and the "raw data output by the inertial sensor in the first time period" in Step S803 is data used to obtain the first bias when the vehicle is in the non-running state before positioning is performed.

In some embodiments, after Step S807 is performed, Step S809 may further be performed to save the calculation coefficients A and B. The calculation coefficients A and B may be used in a next startup phase.

It should be noted that step numbers shown in FIG. 8 are merely used to indicate different steps, and do not limit an execution sequence of the steps. For example, Steps S804 and S805 may be performed simultaneously or sequentially, and Steps S801, S804, and S805 may be performed simultaneously or sequentially.

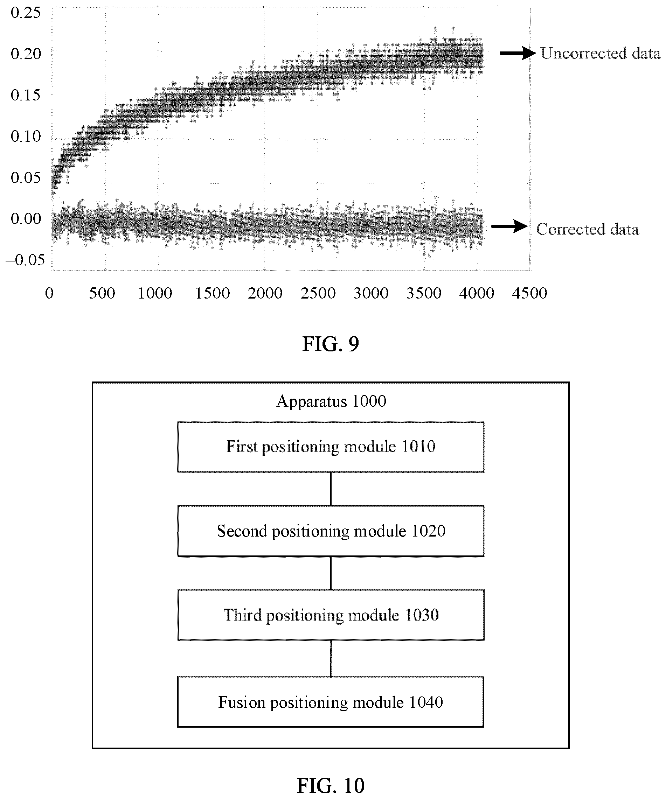

The raw data output by the inertial sensor is corrected based on the first bias to prevent, from a source, some factors such as a temperature from affecting data (such as an angular velocity output by the gyroscope) output by the inertial sensor. For example, FIG. 9 is a schematic diagram of distribution of raw data output by a gyroscope when a vehicle is in a static state and distribution of data obtained by performing compensation based on a first bias, where a horizontal coordinate indicates a distance, and a vertical coordinate indicates an error. As shown in FIG. 9, a data point in an upper area is the raw data output by the gyroscope, that is, uncorrected data; and a data point in a lower area is the data obtained by performing compensation based on the first bias, that is, corrected data. Theoretically, when the vehicle is in a non-running state (for example, the vehicle is static), an angular velocity output by the gyroscope is 0, and no angle is generated. Actually, due to a temperature bias inherent in the gyroscope, the gyroscope also generates an angular velocity output due to a temperature change when the vehicle is static. It can be learned from the figure that the uncorrected data (that is, the angular velocity output by the gyroscope) gradually increases with time. An angle error may be obtained by performing integral calculation on the angular velocity output by the gyroscope. The corrected data fluctuates around 0 but does not increase with time.

Therefore, in this embodiment of this application, the raw data output by the inertial sensor is dynamically compensated based on the first bias in real time, so that an accumulated angle error caused by bias repeatability, the temperature bias, a constant bias error, and the like can be reduced in real time in a traveling process of the vehicle.

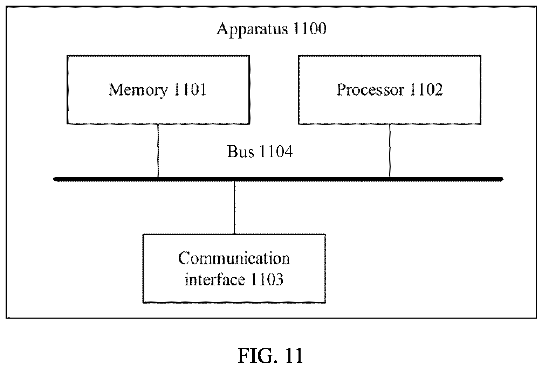

The foregoing describes in detail the method embodiments in embodiments of this application with reference to FIG. 1 to FIG. 9. The following describes in detail apparatus embodiments in embodiments of this application with reference to FIG. 10 and FIG. 11. It should be understood that the descriptions of the method embodiments correspond to descriptions of the apparatus embodiments. Therefore, for parts that are not described in detail, refer to the descriptions in the foregoing method embodiments.

FIG. 10 is a schematic diagram of a positioning apparatus according to an embodiment of this application. An apparatus 1000 shown in FIG. 10 may be an apparatus on the vehicle 100 shown in FIG. 1, an apparatus on the cloud server 200 shown in FIG. 2, or an apparatus on another driving apparatus or cloud computing apparatus. The apparatus 1000 includes a first positioning module 1010, a second positioning module 1020, a third positioning module 1030, and a fusion positioning module 1040. The apparatus 1000 may be configured to perform the positioning method provided in embodiments of this application.

For example, the first positioning module 1010, the second positioning module 1020, and the third positioning module 1030 may be configured to perform Step S410 in the method shown in FIG. 4, and the fusion positioning module 1040 may be configured to perform Step S420 in the method shown in FIG. 4. For another example, the apparatus 1000 may be further configured to perform the positioning method shown in FIG. 6. The first positioning module 1010 may be configured to perform the steps of obtaining first positioning information, for example, perform Steps S601, S602, S603, and S604 in the method shown in FIG. 6. The second positioning module 1020 may be configured to perform the step of obtaining second positioning information, for example, perform Step S605 in the method shown in FIG. 6. The third positioning module 1030 is configured to perform the steps of obtaining third positioning information, for example, perform Steps S606 and S607 in the method shown in FIG. 6. The fusion positioning module 1040 is configured to perform the steps of obtaining a first positioning result or a second positioning result through fusion processing, for example, perform Steps S608 and S609 in the method shown in FIG. 6.

Optionally, the apparatus 1000 may correspond to the hardware shown in FIG. 6. The first positioning module 1010 may correspond to an IMU 610 and/or a functional module configured to perform Step S603. The second positioning module 1020 may correspond to a GNSS 630. The third positioning module 1030 may correspond to a functional module configured to perform Steps S606 and S607. The fusion positioning module 1040 may correspond to a functional module configured to perform Step S608.

FIG. 11 is a schematic diagram of a hardware structure of a positioning apparatus according to an embodiment of this application. An apparatus 1100 includes a memory 1101, a processor 1102, a communication interface 1103, and a bus 1104. The memory 1101, the processor 1102, and the communication interface 1103 are communicatively connected to each other through the bus 1104.

The apparatus 1100 may be configured to perform the steps of the foregoing positioning method.

Optionally, the memory 1101 may be a read-only memory (read-only memory, ROM), a static storage device, a dynamic storage device, or a random access memory (random access memory, RAM). The memory 1101 may store a program. When the program stored in the memory 1101 is executed by the processor 1102, the processor 1102 and the communication interface 1103 are configured to perform the steps of the positioning method in embodiments of this application.

Optionally, the memory 1101 may have a function of the memory 152 shown in FIG. 1 or a function of the system memory 335 shown in FIG. 3, to implement the foregoing function of storing a program. Optionally, the processor 1102 may be a general-purpose CPU, a microprocessor, an ASIC, or one or more integrated circuits, and is configured to execute a related program, to implement a function to be performed by a unit in a vehicle communication apparatus in embodiments of this application, or perform the steps of the positioning method in embodiments of this application.

Optionally, the processor 1102 may have a function of the processor 151 shown in FIG. 1 or a function of the processor 303 shown in FIG. 3, to implement the foregoing function of executing a related program.

Optionally, the processor 1102 may alternatively be an integrated circuit chip, and has an information processing capability. In an implementation process, the steps of the positioning method in embodiments of this application may be performed through an integrated logic circuit of hardware in the processor, or through instructions in a form of software.

Optionally, the processor 1102 may be a general-purpose processor, a digital signal processor (digital signal processing, DSP), an ASIC, a field programmable gate array (field programmable gate array, FPGA) or another programmable logic device, a discrete gate or transistor logic device, or a discrete hardware component. The processor may implement or perform the methods, the steps, and logical block diagrams that are disclosed in embodiments of this application. The general-purpose processor may be a microprocessor, or the processor may be any conventional processor or the like. Steps of the methods disclosed with reference to embodiments of this application may be directly performed by a hardware decoding processor, or may be performed by using a combination of hardware and software modules in the decoding processor. A software module may be located in a mature storage medium in the art, such as a random access memory, a flash memory, a read-only memory, a programmable read-only memory, an electrically erasable programmable memory, or a register. The storage medium is located in the memory. The processor reads information in the memory, and implements, in combination with hardware of the processor, the functions to be performed by the units included in the vehicle communication apparatus in embodiments of this application, or performs the steps of the positioning method in embodiments of this application.

Optionally, the communication interface 1103 may use a transceiver apparatus, for example, but not limited to a transceiver, to implement communication between the apparatus and another device or a communication network.

The bus 1104 may include a path for transmitting information between components (such as the memory, the processor, and the communication interface) of the apparatus.

An embodiment of this application further provides a vehicle, including sensors and the positioning apparatus that is shown in FIG. 10 or FIG. 11. The positioning apparatus may perform the positioning method described in the method embodiments. The sensors may include an inertial sensor, a global navigation satellite system, and a visual sensor. The inertial sensor may be an inertial measurement unit IMU, and is configured to obtain inertial navigation data. The global navigation satellite system may be a GPS, and is configured to obtain satellite positioning data. The visual sensor may be a camera, and is configured to measure and obtain visual positioning data such as image data.

An embodiment of this application further provides a server, including a processor and the positioning apparatus that is shown in FIG. 10 or FIG. 11, and is configured to perform the positioning method described in method embodiments.

An embodiment of this application further provides a system, including a target vehicle and a server. The target vehicle and the server are configured to perform the positioning method described in the method embodiments. Specifically, the target vehicle may perform Step S410 in the method shown in FIG. 4. To be specific, the target vehicle obtains first positioning information, second positioning information, and third positioning information. The server may perform Step S420 in the method shown in FIG. 4. To be specific, when the target vehicle travels in a first environment, the server performs first fusion processing on the first positioning information and the second positioning information, to obtain a first positioning result. Alternatively, when the target vehicle travels in a second environment, the server performs second fusion processing on the first positioning information and the third positioning information, to obtain a second positioning result. The target vehicle may be further configured to perform Steps S601 to S607 in the method shown in FIG. 6, and the server may be configured to perform steps S608 and S609 in the method shown in FIG. 6.

In other words, the target vehicle obtains various positioning information, and the server performs fusion calculation to obtain a final positioning result.

An embodiment of this application further provides a computer-readable storage medium. The computer-readable storage medium stores a computer program. When the computer program is run on a computer, the computer is enabled to perform the positioning method described in the method embodiments.

An embodiment of this application further provides a computer program product. The computer program product includes a computer program. When the computer program product is run on a computer, the computer is enabled to perform the positioning method described in the method embodiments.

In embodiments of this application, "first", "second", and various numeric numbers are merely used for differentiation for ease of description and are not intended to limit the scope of embodiments of this application. For example, different time points are distinguished.

It should be understood that the term "and/or" in this specification describes only an association relationship between associated objects and represents that three relationships may exist. For example, A and/or B may represent the following three cases: Only A exists, both A and B exist, and only B exists. In addition, the character "/" in this specification generally indicates an "or" relationship between associated objects.

It should be understood that sequence numbers of the foregoing processes do not mean execution sequences in various embodiments of this application. The execution sequences of the processes should be determined based on functions and internal logic of the processes, and should not be construed as any limitation on implementation processes of embodiments of this application.

Terms such as "component", "module", and "system" used in this specification are used to indicate computer-related entities, hardware, firmware, combinations of hardware and software, software, or software being executed. For example, a component may be, but is not limited to, a process that runs on a processor, a processor, an object, an executable file, an execution thread, a program, and/or a computer. As illustrated by using figures, both a computing device and an application that runs on the computing device may be components. One or more components may reside within a process and/or an execution thread, and a component may be located on one computer and/or distributed between two or more computers. In addition, these components may be executed from various computer-readable media that store various data structures. For example, the components may communicate by using a local and/or remote process and based on, for example, a signal including one or more data packets (for example, data from two components interacting with another component in a local system, a distributed system, and/or across a network such as the Internet interacting with another system by using the signal).

A person of ordinary skill in the art may be aware that, units and algorithm steps in the examples described in combination with embodiments disclosed in this specification may be implemented by electronic hardware or a combination of computer software and electronic hardware. Whether the functions are performed by hardware or software depends on particular applications and design constraints of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments. Details are not described herein.

In the several embodiments provided in this application, it should be understood that the disclosed system, apparatus, and method may be implemented in other manners. For example, the described apparatus embodiment is merely an example. For example, division into the units is merely logical function division and may be other division in actual implementation. For example, a plurality of units or components may be combined or integrated into another system, or some features may be ignored or not performed. In addition, the displayed or discussed mutual couplings or direct couplings or communication connections may be indirect couplings or communication connections through some interfaces, apparatuses, or units; and may be implemented in electrical, mechanical, or other forms.

The units described as separate parts may or may not be physically separate; and parts displayed as units may or may not be physical units, may be located in one position, or may be distributed on a plurality of network units. Some or all of the units may be selected based on actual requirements to achieve the objectives of the solutions of embodiments.

In addition, functional units in embodiments of this application may be integrated into one processing unit, each of the units may exist alone physically, or two or more units are integrated into one unit.

When the functions are implemented in the form of a software functional unit and sold or used as an independent product, the functions may be stored in a computer-readable storage medium. Based on such an understanding, the technical solutions of this application essentially, or the part contributing to the prior art, or some of the technical solutions may be implemented in a form of a software product. The software product is stored in a storage medium, and includes several instructions for instructing a computer device (which may be a personal computer, a server, or a network device) to perform all or some of the steps of the methods described in embodiments of this application. The foregoing storage medium includes any medium that can store program code, such as a USB flash drive, a removable hard disk, a read-only memory (read-only memory, ROM), a random access memory (random access memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

**Claims**

1. A positioning method, comprising:

   obtaining first positioning information, second positioning information, and third positioning information, wherein the first positioning information is obtained based on inertial navigation data, the second positioning information is obtained based on satellite positioning data, and the third positioning information is obtained based on visual positioning data; and

when a vehicle travels in a first environment, performing first fusion processing on the first positioning information and the second positioning information, to obtain a first positioning result, wherein satellite signal quality in the first environment meets a preset quality requirement; or

when a vehicle travels in a second environment, performing second fusion processing on the first positioning information and the third positioning information, to obtain a second positioning result, wherein satellite signal quality in the second environment does not meet a preset quality requirement.

2. The method according to claim 1, wherein the obtaining first positioning information comprises:

compensating the inertial navigation data based on a first bias, to obtain compensated inertial sensor data, wherein the inertial navigation data is raw data output by an inertial sensor; and

obtaining the first positioning information based on the compensated inertial sensor data.

3. The method according to claim 2, wherein the first bias is obtained based on a temperature and a calculation coefficient that exist when the inertial sensor outputs the inertial navigation data, wherein

the calculation coefficient is obtained by performing least squares fitting on an angular velocity and a temperature that are output by the inertial sensor in a first time period, wherein the vehicle is in a non-running state in the first time period; or

the calculation coefficient is a factory default value.

4. The method according to claim 2, wherein the first bias is an average value of angular velocities output by the inertial sensor in a first time period, wherein the vehicle is in a non-running state in the first time period.

5. The method according to claim 3 or 4, wherein the inertial sensor comprises a gyroscope and an accelerometer; and when the vehicle is in the non-running state in the first time period, the following conditions are met:

a mean square error of angular velocities output by the gyroscope in the first time period is less than a first threshold;

a mean square error of accelerations output by the accelerometer in the first time period is less than a second threshold; and

a speed of the vehicle in the first time period is less than a third threshold.

6. The method according to any one of claims 2 to 5, wherein the first bias comprises at least one of a constant bias error, a proportionality factor error, a temperature error, a non-overlapping and non-orthogonal error, and a non-linear error.

7. The method according to any one of claims 1 to 6, wherein the obtaining first positioning information comprises:

performing, based on a strapdown inertial navigation algorithm, numerical integration and posture solving processing on inertial data corresponding to the inertial sensor, to solve a posture, a speed, and a location of the vehicle to obtain the first positioning information; or

processing, based on a dead reckoning method, inertial data corresponding to the inertial sensor and speed data corresponding to the vehicle to obtain a traveling direction and a traveling distance of the vehicle, and adding the traveling direction and the traveling distance to an initial location to obtain the first positioning information, wherein

the inertial data corresponding to the inertial sensor is the inertial navigation data or data obtained by compensating the inertial navigation data.

8. The method according to any one of claims 1 to 7, wherein the performing first fusion processing on the first positioning information and the second positioning information, to obtain a first positioning result comprises:

performing extended Kalman filter EKF processing on the first positioning information and the second positioning information based on a state transition equation, a first measurement equation, and a second measurement equation, to obtain the first positioning result; or

the performing second fusion processing on the first positioning information and the third positioning information to obtain a second positioning result comprises:

performing EKF processing on the first positioning information and the third positioning information based on a state transition equation, a first measurement equation, and a third measurement equation, to obtain the second positioning result, wherein
observation data of the first measurement equation comes from the inertial sensor, observation data of the second measurement equation comes from a global navigation satellite system, and observation data of the third measurement equation comes from a visual sensor.

9. The method according to claim 8, wherein
the performing EKF processing on the first positioning information and the second positioning information based on a state transition equation, a first measurement equation, and a second measurement equation, to obtain the first positioning result comprises:

performing state estimation based on the state transition equation, to obtain a predicted positioning result;
obtaining, based on the first measurement equation and the first positioning information, a positioning result measured by the inertial sensor;
obtaining, based on the second measurement equation and the second positioning information, a positioning result measured by the global navigation satellite system; and
correcting the predicted positioning result based on the positioning result measured by the inertial sensor and the positioning result measured by the global navigation satellite system, to obtain the first positioning result; or
the performing EKF processing on the first positioning information and the third positioning information based on a state transition equation, a first measurement equation, and a third measurement equation, to obtain the second positioning result comprises:

performing state estimation based on the state transition equation, to obtain a predicted positioning result;
obtaining, based on the first measurement equation and the first positioning information, a positioning result measured by the inertial sensor;
obtaining, based on the third measurement equation and the third positioning information, a positioning result measured by the visual sensor; and
correcting the predicted positioning result based on the positioning result measured by the inertial sensor and the positioning result measured by the visual sensor, to obtain the second positioning result.

10. The method according to claim 8 or 9, wherein the method further comprises:

obtaining an estimated error of at least one parameter after the EKF processing is performed, wherein the estimated error of the at least one parameter is used to correct a value of the at least one parameter, wherein the at least one parameter comprises one or more of a northbound location, an eastbound location, a roll angle, a pitch angle, a yaw angle, an angular velocity output by the gyroscope, and a speed scale factor.

11. The method according to claim 10, wherein the at least one parameter comprises the speed scale factor, and the estimated error of the at least one parameter comprises a speed scale factor error; and the method further comprises:

correcting the speed scale factor based on the speed scale factor error, to obtain a corrected speed scale factor; and
obtaining a speed of the vehicle based on the corrected speed scale factor.

12. The method according to any one of claims 1 to 11, wherein the first positioning result or the second positioning result comprises the speed and a pitch angle of the vehicle, and the method further comprises:

determining a displacement value of the vehicle in a traveling time period based on the speed of the vehicle and the traveling time period; and
determining an elevation variation of the vehicle in the traveling time period based on the pitch angle and the displacement value.

13. The method according to any one of claims 1 to 12, wherein the preset quality requirement comprises at least one of the following:

a satellite is in an effective positioning state;

a horizontal dilution of precision of the satellite is lower than or equal to a preset precision threshold;

a quantity of satellites in the effective positioning state is greater than or equal to a preset first quantity threshold;

a quantity of satellites whose signal strengths each are greater than or equal to a preset first strength threshold is greater than or equal to a preset second quantity threshold;

a strength of a satellite signal received by the vehicle is greater than or equal to a preset second strength threshold; and

a signal-to-noise ratio of the vehicle is greater than or equal to a preset signal-to-noise ratio threshold.

14. A positioning apparatus, comprising:

a first positioning module, configured to obtain first positioning information, wherein the first positioning information is obtained based on inertial navigation data;

a second positioning module, configured to obtain second positioning information, wherein the second positioning information is obtained based on satellite positioning data;

a third positioning module, configured to output third positioning information, wherein the third positioning information is obtained based on visual positioning data; and

a fusion positioning module, configured to: when a vehicle travels in a first environment, perform first fusion processing on the first positioning information and the second positioning information, to obtain a first positioning result, wherein satellite signal quality in the first environment meets a preset quality requirement; or

a fusion positioning module, configured to: when a vehicle travels in a second environment, perform second fusion processing on the first positioning information and the third positioning information, to obtain a second positioning result, wherein satellite signal quality in the second environment does not meet a preset quality requirement.

15. The apparatus according to claim 14, wherein the first positioning module is specifically configured to:

compensate the inertial navigation data based on a first bias, to obtain compensated inertial sensor data, wherein the inertial navigation data is raw data output by an inertial sensor; and

obtain the first positioning information based on the compensated inertial sensor data.

16. The apparatus according to claim 15, wherein the first bias is obtained based on a temperature and a calculation coefficient that exist when the inertial sensor outputs the inertial navigation data, wherein

the calculation coefficient is obtained by performing least squares fitting on an angular velocity and a temperature that are output by the inertial sensor in a first time period, wherein the vehicle is in a non-running state in the first time period; or

the calculation coefficient is a factory default value.

17. The apparatus according to claim 15, wherein the first bias is an average value of angular velocities output by the inertial sensor in a first time period, wherein the vehicle is in a non-running state in the first time period.

18. The apparatus according to claim 16 or 17, wherein the inertial sensor comprises a gyroscope and an accelerometer; and when the vehicle is in the non-running state in the first time period, the following conditions are met:

a mean square error of angular velocities output by the gyroscope in the first time period is less than a first threshold;

a mean square error of accelerations output by the accelerometer in the first time period is less than a second threshold; and

a speed of the vehicle in the first time period is less than a third threshold.

19. The apparatus according to any one of claims 15 to 18, wherein the first bias comprises at least one of a constant bias error, a proportionality factor error, a temperature error, a non-overlapping and non-orthogonal error, and a non-linear error.

20. The apparatus according to any one of claims 14 to 19, wherein the first positioning module is specifically configured to:

perform, based on a strapdown inertial navigation algorithm, numerical integration and posture solving processing on inertial data corresponding to the inertial sensor, to solve a posture, a speed, and a location of the vehicle to obtain the first positioning information; or

process, based on a dead reckoning method, inertial data corresponding to the inertial sensor and speed data corresponding to the vehicle to obtain a traveling direction and a traveling distance of the vehicle, and add the traveling direction and the traveling distance to an initial location to obtain the first positioning information, wherein the inertial data corresponding to the inertial sensor is the inertial navigation data or data obtained by compensating the inertial navigation data.

21. The apparatus according to any one of claims 14 to 20, wherein the fusion positioning module is specifically configured to:

perform extended Kalman filter EKF processing on the first positioning information and the second positioning information based on a state transition equation, a first measurement equation, and a second measurement equation, to obtain the first positioning result; or
perform EKF processing on the first positioning information and the third positioning information based on a state transition equation, a first measurement equation, and a third measurement equation, to obtain the second positioning result, wherein
observation data of the first measurement equation comes from the inertial sensor, observation data of the second measurement equation comes from a global navigation satellite system, and observation data of the third measurement equation comes from a visual sensor.

22. The apparatus according to claim 21, wherein the fusion positioning module is specifically configured to:

perform state estimation based on the state transition equation, to obtain a predicted positioning result;
obtain, based on the first measurement equation and the first positioning information, a positioning result measured by the inertial sensor;
obtain, based on the second measurement equation and the second positioning information, a positioning result measured by the global navigation satellite system; and
correct the predicted positioning result based on the positioning result measured by the inertial sensor and the positioning result measured by the global navigation satellite system, to obtain the first positioning result; or
the fusion positioning module is specifically configured to:

perform state estimation based on the state transition equation, to obtain a predicted positioning result;
obtain, based on the first measurement equation and the first positioning information, a positioning result measured by the inertial sensor;
obtain, based on the third measurement equation and the third positioning information, a positioning result measured by the visual sensor; and
correct the predicted positioning result based on the positioning result measured by the inertial sensor and the positioning result measured by the visual sensor, to obtain the second positioning result.

23. The apparatus according to claim 21 or 22, wherein the fusion positioning module is further configured to:

obtain an estimated error of at least one parameter after the EKF processing is performed, wherein the estimated error of the at least one parameter is used to correct a value of the at least one parameter, wherein
the at least one parameter comprises one or more of a northbound location, an eastbound location, a roll angle, a pitch angle, a yaw angle, an angular velocity output by the gyroscope, and a speed scale factor.

24. The apparatus according to claim 23, wherein the at least one parameter comprises the speed scale factor, and the estimated error of the at least one parameter comprises a speed scale factor error; and the fusion positioning module is further configured to:

correct the speed scale factor based on the speed scale factor error, to obtain a corrected speed scale factor; and
obtain a speed of the vehicle based on the corrected speed scale factor.

25. The apparatus according to any one of claims 14 to 24, wherein the first positioning result or the second positioning result comprises the speed and a pitch angle of the vehicle, and the fusion positioning module is further configured to:

determine a displacement value of the vehicle in a traveling time period based on the speed of the vehicle and the traveling time period; and

determine an elevation variation of the vehicle in the traveling time period based on the pitch angle and the displacement value.

26. The apparatus of any one of claims 14 to 25, wherein the preset quality requirement comprises at least one of the following:

a satellite is in an effective positioning state;

a horizontal dilution of precision of the satellite is lower than or equal to a preset precision threshold;

a quantity of satellites in the effective positioning state is greater than or equal to a preset first quantity threshold;

a quantity of satellites whose signal strengths each are greater than or equal to a preset first strength threshold is greater than or equal to a preset second quantity threshold;

a strength of a satellite signal received by the vehicle is greater than or equal to a preset second strength threshold; and

a signal-to-noise ratio of the vehicle is greater than or equal to a preset signal-to-noise ratio threshold.

27. A positioning apparatus, comprising at least one memory and at least one processor, wherein the at least one memory is configured to store a program, and the at least one processor is configured to run the program, to perform the positioning method according to any one of claims 1 to 13.

28. A computer-readable storage medium, wherein the computer-readable storage medium stores a computer program, and when the computer program is run on a computer, the computer is enabled to perform the positioning method according to any one of claims 1 to 13.

29. A computer program product, wherein the computer program product comprises a computer program, and when the computer program product is run on a computer, the computer is enabled to perform the positioning method according to any one of claims 1 to 13.

30. A vehicle, comprising a sensor and the positioning apparatus according to any one of claims 14 to 26.

31. A server, comprising a processor and the positioning apparatus according to any one of claims 14 to 26.

Vehicle 100

Travel system 110

Engine 111

Transmission apparatus 112

Energy source 113

Wheel 114

Sensing system 120

Positioning system 121

Inertial measurement unit 122

Radar 123

Laser rangefinder 124

Camera 125

Vehicle speed sensor 126

Control system 130

Steering system 131

Throttle 132

Brake unit 133

Computer vision system 134

Route control system 135

Obstacle avoidance system 136

Peripheral device 140

Wireless communication system 141

Vehicle-mounted computer 142

Microphone 143

Speaker 144

Processor 151

Instructions 153

Memory 152

Computer system 150

Power supply 160

User interface 170

FIG. 1

FIG. 2

FIG. 3

EP 4 382 864 A1

400

| | S410 |
| Obtain first positioning information, second positioning information, and third positioning information | |

| | S420 |
| When a vehicle travels in a first environment, perform first fusion processing on the first positioning information and the second positioning information, to obtain a first positioning result; or when a vehicle travels in a second environment, perform second fusion processing on the first positioning information and the third positioning information, to obtain a second positioning result | |

FIG. 4

100

Q

P    $\theta$    $\theta$

FIG. 5

FIG. 6

EP 4 382 864 A1

FIG. 7

Start

Is a system initialized for the first time? — S801

Yes

No

Obtain raw data output by an inertial sensor in a first time period — S803

No

Is a vehicle in a non-running state? — S804

Yes

Is a requirement of a least squares method met? — S805

No — S806

Yes — S807

Calculate a first bias based on factory-default calculation coefficients A and B — S802

Calculate an average value of the raw data output by the inertial sensor in the first time period, and use the average value as a first bias

Perform least squares fitting on the raw data output by the inertial sensor in the first time period to obtain calculation coefficients A and B, and calculate a first bias based on the calculation coefficients A and B

Correct, in real time based on the first bias, the raw data output by the inertial sensor — S808

Save the calculation coefficients A and B — S809

FIG. 8

FIG. 9

FIG. 10

FIG. 11

## INTERNATIONAL SEARCH REPORT

| International application No. |
|---|
| **PCT/CN2021/114305** |

### A. CLASSIFICATION OF SUBJECT MATTER

G01C 21/16(2006.01)i;  G01S 19/49(2010.01)i

According to International Patent Classification (IPC) or to both national classification and IPC

### B. FIELDS SEARCHED

Minimum documentation searched (classification system followed by classification symbols)

G01C G01S

Documentation searched other than minimum documentation to the extent that such documents are included in the fields searched

Electronic data base consulted during the international search (name of data base and, where practicable, search terms used)

CNPAT, CNKI, WPI, EPODOC: 华为, 王佩生, 王进崴, 陈杰, 程渊, 定位, 组合, 融合, 不同, 环境, 路况, 选择, 卫星信号, 差, 没有, 无, position+, combinat+, different, condition, situation, choose, GPS, no, bad

### C. DOCUMENTS CONSIDERED TO BE RELEVANT

| Category* | Citation of document, with indication, where appropriate, of the relevant passages | Relevant to claim No. |
|---|---|---|
| X | CN 111812698 A (BEIJING TUSIMPLE FUTURE TECHNOLOGY CO., LTD.) 23 October 2020 (2020-10-23) description, paragraphs 37-202, and figures 1-9 | 1-31 |
| A | CN 108089180 A (JIANGSU TIANLE INTELLIGENT TECHNOLOGY CO., LTD.) 29 May 2018 (2018-05-29) entire document | 1-31 |
| A | CN 108802786 A (BEIDOUXINGTONG (CHONGQING) AUTOMOBILE ELECTRONIC CO., LTD.) 13 November 2018 (2018-11-13) entire document | 1-31 |
| A | CN 112461261 A (CHANGSHA SPACETY SPACE SCIENCE AND TECHNOLOGY RESEARCH INSTITUTE CO., LTD.) 09 March 2021 (2021-03-09) entire document | 1-31 |
| A | CN 112526570 A (CRRC ZHUZHOU INSTITUTE CO., LTD.) 19 March 2021 (2021-03-19) entire document | 1-31 |
| A | CN 109612476 A (GUANGZHOU CHENCHUANG TECHNOLOGY DEVELOPMENT CO., LTD.) 12 April 2019 (2019-04-12) entire document | 1-31 |

☑ Further documents are listed in the continuation of Box C.    ☑ See patent family annex.

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| **12 April 2022** | **20 May 2022** |

| Name and mailing address of the ISA/CN | Authorized officer |
|---|---|
| **China National Intellectual Property Administration (ISA/ CN)** <br> **No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

**INTERNATIONAL SEARCH REPORT**

| International application No. |
|---|
| **PCT/CN2021/114305** |

**C.    DOCUMENTS CONSIDERED TO BE RELEVANT**

| Category* | Citation of document, with indication, where appropriate, of the relevant passages | Relevant to claim No. |
|---|---|---|
| A | CN 110715659 A (GOSUNCNWELINK TECHNOLOGY CO., LTD.) 21 January 2020 (2020-01-21)<br>        entire document | 1-31 |
| A | US 2020340816 A1 (MEDIATEK INC.) 29 October 2020 (2020-10-29)<br>        entire document | 1-31 |

Form PCT/ISA/210 (second sheet) (January 2015)

INTERNATIONAL SEARCH REPORT
Information on patent family members

International application No.

**PCT/CN2021/114305**

| Patent document cited in search report | | | Publication date (day/month/year) | Patent family member(s) | | | Publication date (day/month/year) |
|---|---|---|---|---|---|---|---|
| CN | 111812698 | A | 23 October 2020 | None | | | |
| CN | 108089180 | A | 29 May 2018 | None | | | |
| CN | 108802786 | A | 13 November 2018 | None | | | |
| CN | 112461261 | A | 09 March 2021 | None | | | |
| CN | 112526570 | A | 19 March 2021 | None | | | |
| CN | 109612476 | A | 12 April 2019 | None | | | |
| CN | 110715659 | A | 21 January 2020 | None | | | |
| US | 2020340816 | A1 | 29 October 2020 | CN | 111856540 | A | 30 October 2020 |
| | | | | TW | 202040163 | A | 01 November 2020 |

Form PCT/ISA/210 (patent family annex) (January 2015)